# EUROPÄISCHE PATENTSCHRIFT

(11) **EP 4 016 237 B1**
(45) Veröffentlichungstag und Bekanntmachung des Hinweises auf die Patenterteilung: **28.08.2024**
(21) Anmeldenummer: 21215077.5
(22) Anmeldetag: 16.12.2021
(51) Int. Cl.: G05D 23/19, F24H 15/204, F24H 15/208, F24H 15/31, F24H 15/414

(54) **REGELVORRICHTUNG, SYSTEM UND VERFAHREN ZUM REGELN EINER TEMPERATUR IN EINEM RAUM UND HEIZKÖRPERVORRICHTUNG**
CONTROL DEVICE, SYSTEM AND METHOD FOR CONTROLLING A TEMPERATURE IN A ROOM AND A HEATING BODY DEVICE
DISPOSITIF DE RÉGULATION, SYSTÈME ET PROCÉDÉ DE RÉGULATION D'UNE TEMPÉRATURE DANS UN ESPACE ET DISPOSITIF RADIATEUR

(30) Priorität: 17.12.2020 DE 102020216201
(43) Veröffentlichungstag der Anmeldung: 22.06.2022
(73) Patentinhaber: Viessmann Climate Solutions SE, 35108 Allendorf (DE)
(72) Erfinder: SKIBA, Paul, 19370 Parchim (DE); STRUBEL, Jan, 64319 Pfungstadt (DE)
(74) Vertreter: MERH-IP Matias Erny Reichl Hoffmann Patentanwälte PartG mbB

(56) Entgegenhaltungen:
- EP-B1- 1 999 833
- EP-B1- 3 039 502
- EP-B1- 3 339 752
- GB-A- 2 462 143
- US-A1- 2013 056 543

## Beschreibung

### Technisches Gebiet

Die vorliegende Erfindung betrifft ein Verfahren zum Regeln einer Temperatur in einem Raum, eine Heizkörpervorrichtung und ein Software-Programmprodukt zur Ausführung durch ein System, eine Heizkörpervorrichtung oder eine Regelvorrichtung.

### Technischer Hintergrund

Einem Raum in einem Gebäude wird in Abhängigkeit der Raumgröße etc. eine Heizleistung zugeordnet, sodass die Raumtemperatur unabhängig einer Außentemperatur auf einen vorgegebenen Wert geregelt werden kann. Je nach Raum- bzw. Gebäudeeigenschaften können ein oder mehrere Heizkörper in einem Raum angeordnet sein, sodass die dem Raum zugeordnete Heizleistung mittels der Heizkörper erreicht wird. Die Wärmeversorgung der einzelnen Heizkörper variiert hinsichtlich des Anspruchsverhaltens sowie der Leistung in Abhängigkeit der Leitungslängen im Vor- und Rücklauf, der Leitungsquerschnitte sowie eines Strömungswiderstands des Heizkörpers.

Ziel ist es jedoch eine Raumtemperatur möglichst gleichmäßig auf eine Raum-Soll-Temperatur zu regeln, um unangenehme Luftzirkulationen zu vermeiden.

Aus diesem Grund werden die Volumenströme durch die einzelnen Heizkörper mittels Strömungswiderstände in einem sogenannten hydraulischen Abgleich aufeinander abgeglichen.

Die EP 2 912 384 B1 zeigt dazu, dass eine Regeleinheit einer Heizungsanlage dazu ausgebildet ist, einen dynamischen hydraulischen Abgleich durch eine Hubbegrenzung und/oder eine Anpassung der Pumpenleistung und/oder eine Adaption der Vorlauftemperatur vom Wärmeerzeuger in Abhängigkeit vom Hub des hydraulisch ungünstigsten Ventils durchzuführen.

Die EP 3 039 502 B1 zeigt ferner eine Heizungsanlage mit zwei innerhalb eines Raumes angeordneten Heizungskörpern, deren Steuereinheiten jeweils einen Temperatursensor umfassen, sowie einen unabhängig von den Heizkörpern angeordneten zusätzlichen Temperatursensor. Eine zentrale Steuerung der Heizungsanlage ist dabei dazu eingerichtet, eine jeweilige Steuereinheit einer der beiden Heizungskörper auf Basis der durch den dortigen Temperatursensor erfassten Temperatur, der durch den zusätzlichen Temperatursensor erfassten Temperatur und einer vorgegeben Soll-Temperatur des Raumes anzusteuern.

Weiterhin zeigt die EP 3 339 752 B1 eine Heizungsanlage mit mehreren Heizkörpern in einem Raum, deren Steuereinheiten jeweils einen Temperatursensor umfassen und die über ein Kommunikationssystem zum Informationsaustausch miteinander gekoppelt sind, um entweder Informationen zu einer vorgegebenen Soll-Temperatur miteinander zu teilen oder einer Untermenge der Heizkörper einen Steuerungsbefehl einer als Master fungierenden Steuerungseinheit aufzuzwingen.

Weiterhin zeigt die GB 2 462 143 A eine Heizungsanlage mit mehreren Heizkörpern, die zur Möglichkeit der Steuerung der jeweiligen Heizungskörper eine zentrale Steuerungseinheit zeigt, die mit den einzelnen Heizungskörpern über jeweilige drahtlose Datenschnittstellen verbunden ist.

Ausgehend davon ist es Aufgabe der Erfindung eine Regelvorrichtung, ein System und ein Verfahren zum Regeln einer Temperatur in einem Raum bzw. eine Heizkörpervorrichtung und ein Computerprogramm-Produkt bereitzustellen, sodass Luftzirkulationen im Raum vermieden werden.

### Beschreibung der Erfindung

Die Aufgabe der Erfindung wird mit den unabhängigen Patentansprüchen gelöst. Die abhängigen Ansprüche beziehen sich auf besondere Ausführungsformen der Erfindung.

Ein erfindungsgemäßes Verfahren zum Regeln einer Temperatur in einem Raum, in dem eine Mehrzahl an Heizkörpern angeordnet ist, wobei jeder der Heizkörper ein Stellglied zum Steuern einer Heizleistung des jeweiligen Heizkörpers der Mehrzahl an Heizkörpern und einen Temperatursensor zum Ermitteln einer Temperatur in einer Umgebung des jeweiligen Heizkörpers der Mehrzahl an Heizkörpern aufweist, kann die folgenden Schritte umfassen: Vorgeben einer Raum-Soll-Temperatur und Erfassen einer Temperatur in der Umgebung eines jeden Heizkörpers der Mehrzahl an Heizkörpern mittels der Temperatursensoren als Umgebungstemperatur des jeweiligen Heizkörpers.

Ein Raum kann beispielsweise ein abgeschlossener Raum, ein offener Raum bzw. ein Raumabschnitt sein. Ein Heizkörper kann eine Heizleiste, ein Wärmestrahler und/oder ein Konvektor sein. In manchen Ausführungsformen kann ein Heizkörper dazu eingerichtet sein, elektrische Energie in Wärme umzuwandeln und an die Umgebung, beispielsweise durch Wärmestrahlung und/oder durch Konvektion, abzugeben. In manchen Ausführungsformen kann ein Heizkörper dazu eingerichtet sein, Wärme eines Wärmeträgers, wie einem Gas, Gasgemisch, einer Flüssigkeit etc. an die Umgebung abzugeben.

Ein Stellglied kann dazu eingerichtet sein, einen Volumenstrom durch einen Heizkörper zu begrenzen bzw. eine Umwandlung von elektrischer Energie in thermische Energie eines Heizkörpers zu regulieren, sodass eine Wärmeabgabe des Heizkörpers an die Umgebung reguliert wird.

Das Vorgeben einer Raum-Soll-Temperatur kann beispielsweise durch Auslesen eines Temperaturwerts aus einer Speichereinheit oder durch eine Eingabe eines Temperaturwerts in eine Benutzerschnittstelle durch einen Benutzer erfolgen.

Vorteilhafterweise kann ein Temperatursensor an einem Stellglied und/oder einem Heizkörper zum Erfassen einer Temperatur in einer Umgebung des Stellglieds/Heizkörpers befestigt sein. Das Erfassen einer Temperatur in der Umgebung eines Heizkörpers kann ein Abtasten eines Sensorsignals, insbesondere eines Temperatursensors umfassen. Das Erfassen einer Temperatur in der Umgebung eines Heizkörpers kann ein Empfangen und/oder Abfragen von Sensordaten, insbesondere eines Temperatursensors umfassen.

Das Erfindungsgemäße Verfahren umfasst den Schritt Ansteuern des Stellglieds eines Heizkörpers der Mehrzahl an Heizkörpern zum Steuern der Heizleistung in Abhängigkeit der Umgebungstemperaturen der Mehrzahl an Heizkörpern und in Abhängigkeit der Raum-Soll-Temperatur.

Ein Vorteil des erfindungsgemäßen Verfahrens ist, dass die Heizleistungen der Heizkörper der Mehrzahl an Heizkörpern aufeinander abgestimmt werden können, sodass ein Raum besonders gleichmäßig erwärmt werden kann, ohne dass ein aufwändiger Hydraulikabgleich notwendig ist. Des Weiteren hat das Verfahren den Vorteil, dass Umweltparameter, wie eine Sonneneinstrahlung, ein offenes Fenster, ein Backofen, Temperaturunterschiede im Raum etc. mitberücksichtigt werden. Als Folge kann dadurch eine Luftzirkulation in dem Raum auf Grund von Temperaturdifferenzen reduziert werden.

In einer besonders strukturierten Ausführungsform kann der Schritt Ansteuern des Stellglieds mittels einer zentralen Einheit für die Stellglieder mehrerer Heizkörper, insbesondere aller Heizkörper, der Mehrzahl an Heizkörpern ausgeführt werden.

In einer besonders flexiblen Ausführungsform kann der Schritt Ansteuern des Stellglieds mittels mehrerer dezentraler Einheiten, insbesondere mittels jeweils einer dezentralen Einheit, für die Stellglieder mehrerer Heizkörper, insbesondere aller Heizkörper, der Mehrzahl an Heizkörpern ausgeführt werden.

Ein besonders vorteilhaftes Verfahren kann (zusätzlich) einen Schritt Vergleichen der erfassten Umgebungstemperaturen der Mehrzahl an Heizkörpern miteinander umfassen. Das Ansteuern des Stellglieds eines Heizkörpers der Mehrzahl an Heizkörpern zum Steuern der Heizleistung kann dann in Abhängigkeit des Ergebnisses des Vergleichs erfolgen.

Dies hat den Vorteil, dass ein Stellglied so angesteuert werden kann, dass eine Temperatur in einem Raum besonders gleichmäßig ist und die Raumtemperatur besonders effizient an die Raum-Soll-Temperatur angepasst werden kann.

In einem besonders fortschrittlichen Verfahren kann der Schritt Vergleichen der erfassten Umgebungstemperaturen der Mehrzahl an Heizkörpern miteinander den Schritt Ermitteln von Differenzen zwischen der Raum-Soll-Temperatur und den Umgebungstemperaturen der Mehrzahl an Heizkörpern umfassen, und das Vergleichen der erfassten Umgebungstemperaturen der Mehrzahl an Heizkörpern miteinander durch Vergleichen der ermittelten Differenzen erfolgen.

Dies kann den Vorteil haben, dass die Raumtemperatur besonders gleichmäßig und besonders effizient an die Raum-Soll-Temperatur angepasst werden kann. Ein weiterer Vorteil ist, dass dadurch ein Überheizen von zumindest einzelnen Teilen des Raums vermieden werden kann.

Ein besonders angepasstes Verfahren kann den zusätzlichen Schritt Ermitteln einer Heizkörperart mindestens eines Heizkörpers der Mehrzahl an Heizkörpern umfassen, wobei das Ansteuern des Stellglieds des einen Heizkörpers der Mehrzahl an Heizkörpern zusätzlich in Abhängigkeit der Heizkörperart des mindestens einen Heizkörpers der Mehrzahl an Heizkörpern erfolgt.

Heizkörperarten (Heizkörpertypen) können hinsichtlich der Wärmequelle unterschieden werden, wie zum Beispiel einem elektrischen Heizkörper und einem Heizkörper, dem die Wärme durch ein Fluid von einem Wärmeerzeuger zugeführt wird. Des Weiteren kann zwischen Wärmestrahlern, Konvektoren und einer Mischform der beiden unterschieden werden. Eine weitere Einteilung kann bezüglich der Geometrie erfolgen, wie beispielsweise Plattenheizkörper, Gliederheizkörper, Röhrenheizkörper, Flächenheizungen, wie Fußbodenheizungen und Wandheizungen.

Dadurch kann die Heizleistung des einen Heizkörpers besonders an die Wärmeabgabe-Charakteristik des mindestens einen Heizkörpers angepasst werden. Dies hat den Vorteil, dass unangenehme Luftzirkulationen auf Grund einer ungünstigen Ansteuerung eines Heizkörpers vermieden werden können und dennoch die Raumtemperatur im gesamten Raum optimal an die Raum-Soll-Temperatur angepasst wird.

Ein besonders effizientes Verfahren kann zusätzlich den Schritt Ermitteln eines Heizleistungsreferenzwerts mindestens eines Heizkörpers der Mehrzahl an Heizkörpern umfassen, wobei das Ansteuern des Stellglieds des einen Heizkörpers der Mehrzahl an Heizkörpern zusätzlich in Abhängigkeit des Heizleistungsreferenzwerts des mindestens einen Heizkörpers der Mehrzahl an Heizkörpern erfolgen kann.

Dies hat den Vorteil, dass eine Steuerung des Stellglieds des mindestens einen Heizkörpers besonders präzise im Hinblick auf die Heizleistung des mindestens einen Heizkörpers erfolgen und dadurch die Effizienz einer Raum-Temperatur-Regelung verbessert werden kann.

Ein besonders robustes Verfahren kann zusätzlich den Schritt Ermitteln einer Anordnung mindestens eines Heizkörpers der Mehrzahl an Heizkörpern im Raum, wobei das Ansteuern des Stellglieds des einen Heizkörpers der Mehrzahl an Heizkörpern zusätzlich in Abhängigkeit der Anordnung im Raum des mindestens einen Heizkörpers der Mehrzahl an Heizkörpern erfolgt.

Dies kann den Vorteil haben, dass Temperaturgradienten im Raum ermittelt werden können und diesen gezielt entgegengewirkt werden kann, sodass eine gleichmäßige Raumtemperatur im Raum erzielt wird. Insbesondere bei einem Ausfall eines Heizkörpers, beispielsweise aufgrund eines Defekts eines Stellglieds kann dadurch eine möglichst gleichmäßige Raumtemperatur erzielt werden. Dadurch kann wiederum eine unangenehme Luftzirkulation vermieden werden.

Ein besonders vorteilhaftes Verfahren kann die zusätzlichen Schritte Ermitteln eines Volumenstroms durch mindestens einen Heizkörper der Mehrzahl an Heizkörpern und/oder Ermitteln einer Temperatur eines Volumenstroms durch mindestens einen Heizkörper der Mehrzahl an Heizkörpern umfassen, wobei das Ansteuern des Stellglieds des einen Heizkörpers der Mehrzahl an Heizkörpern zusätzlich in Abhängigkeit des ermittelten Volumenstroms des mindestens einen Heizkörpers der Mehrzahl an Heizkörpern und/oder zusätzlich in Abhängigkeit der ermittelten Temperatur des Volumenstroms durch den mindestens einen Heizkörper der Mehrzahl an Heizkörpern erfolgt.

Dies kann den Vorteil haben, dass hydraulische Unterschiede zwischen den Heizkörpern gesondert berücksichtigt werden können und dadurch eine besonders effiziente Regelung der Raumtemperatur mit der Raum-Soll-Temperatur als Regelziel möglich ist.

Ein besonders fortschrittliches Verfahren kann die zusätzlichen Schritte Erfassen einer Temperaturänderung in der Umgebung mindestens eines Heizkörpers der Mehrzahl an Heizkörpern mittels des Temperatursensors des mindestens einen Heizkörpers der Mehrzahl an Heizkörpern und/oder Erfassen einer Änderung einer Ansteuerung des Stellglieds mindestens eines Heizkörpers der Mehrzahl an Heizkörpern umfassen, wobei das Ansteuern des Stellglieds des einen Heizkörpers der Mehrzahl an Heizkörpern in Abhängigkeit der erfassten Temperaturänderung und/oder in Abhängigkeit der erfassten Änderung der Ansteuerung erfolgt.

Dadurch kann ein Ansprechverhalten eines Heizkörpers in Abhängigkeit einer Steuerung des Heizkörpers ermittelt werden und eine Regelung besonders an das Ansprechverhalten des Heizkörpers angepasst werden. Dies hat den Vorteil, dass der Heizkörper so angesteuert werden kann, dass eine Raumtemperatur besonders zielführend an die Raum-Soll-Temperatur angepasst wird.

In manchen Ausführungsformen kann das Ansteuern des Stellglieds zentral erfolgen. Dazu kann das Ansteuern des Stellglieds, insbesondere mittels eines Steuersignals, durch eine Steuereinheit erfolgen, wobei die Steuereinheit dazu eingerichtet ist, Steuersignale für die Stellglieder mehrerer Heizkörper der Mehrzahl an Heizkörpern in Abhängigkeit der empfangenen Temperaturwerte und in Abhängigkeit der Raum-Soll-Temperatur zu erzeugen. Vorteilhafterweise kann der Schritt Ansteuern einen Schritt Übertragen des Steuersignals an das Stellglied umfassen. Das Übertragen kann beispielsweise mittels einer Kommunikationseinheit erfolgen, die insbesondere dazu eingerichtet ist, Steuersignale an die mehreren Heizkörper der Mehrzahl an Heizkörpern zu übertragen. Dadurch kann auf einfache Weise die Heizleistung einer Mehrzahl an Heizkörpern zentral gesteuert werden.

In manchen Ausführungsformen kann das Ansteuern des Stellglieds durch eine Steuereinheit erfolgen, die dazu eingerichtet ist, das Stellglied dezentral zu steuern. Insbesondere kann die Steuereinheit dazu eingerichtet sein, nur das Stellglied eines Heizkörpers/Heizkörperventils, insbesondere kein Stellglied eines weiteren Heizkörpers zu steuern. Dies kann den Vorteil haben, dass die Ausführung vor allem bei wenigen Heizkörpern besonders einfach erfolgen kann. Des Weiteren kann dadurch das Verfahren besonders einfach in einem bestehenden Heizungssystem nachgerüstet werden.

Ein erfindungsgemäßes System zum Regeln einer Raumtemperatur umfasst eine Mehrzahl an Heizkörpern in einem Raum, wobei jeder der Heizkörper ein Stellglied, das dazu eingerichtet ist, die Heizleistung des Heizkörpers zu regeln, und einen Temperatursensor, der dazu eingerichtet ist, eine Temperatur in einer Umgebung des Heizkörpers zu ermitteln, umfasst.

Des Weiteren beinhaltet das System eine Einheit zum Bereitstellen einer Raum-Soll-Temperatur, die dazu eingerichtet ist, eine Raum-Soll-Temperatur vorzugeben, und eine Steuereinheit, die dazu eingerichtet ist, das Stellglied eines Heizkörpers der Mehrzahl an Heizkörpern in Abhängigkeit der von den Temperatursensoren der Mehrzahl an Heizkörpern ermittelten Temperaturwerte und in Abhängigkeit der Raum-Soll-Temperatur zu steuern.

Die Steuereinheit kann eine oder mehrere analoge und/oder digitale Schaltungen umfassen.

Die Steuereinheit kann dazu eingerichtet sein, die erfassten Umgebungstemperaturen der Mehrzahl an Heizkörpern miteinander zu vergleichen, wobei das Ansteuern des Stellglieds eines Heizkörpers der Mehrzahl an Heizkörpern zum Steuern der Heizleistung in Abhängigkeit des Ergebnisses des Vergleichs erfolgt. In manchen Ausführungsformen kann die Steuereinheit dazu eine Vergleichseinheit umfassen.

Die Steuereinheit kann dazu eingerichtet sein, Differenzen zwischen der Raum-Soll-Temperatur und den Umgebungstemperaturen der Mehrzahl an Heizkörpern zu ermitteln und die ermittelten Differenzen miteinander zu vergleichen, wobei das Ansteuern des Stellglieds eines Heizkörpers der Mehrzahl an Heizkörpern zum Steuern der Heizleistung in Abhängigkeit des Ergebnisses des Vergleichs erfolgt.

In einem besonders vorteilhaften System kann die Steuereinheit eine zentrale Steuereinheit sein, die dazu eingerichtet ist, Steuersignale für die Stellglieder mehrerer Heizkörper der Mehrzahl an Heizkörpern in Abhängigkeit der von den Temperatursensoren der Mehrzahl an Heizkörpern ermittelten Temperaturwerte und in Abhängigkeit der Raum-Soll-Temperatur zu erzeugen. Das System kann dabei eine Kommunikationseinheit umfassen, die dazu eingerichtet ist, die Steuersignale an die Stellglieder der mehreren Heizkörper der Mehrzahl an Heizkörpern zum Steuern der Stellglieder zu übertragen.

In einem besonders flexiblen System kann die Steuereinheit eine dezentrale Steuereinheit sein, die dazu eingerichtet ist, das Stellglied eines einzigen Heizkörpers der Mehrzahl an Heizkörpern in Abhängigkeit der von den Temperatursensoren der Mehrzahl an Heizkörpern ermittelten Temperaturwerte und in Abhängigkeit der Raum-Soll-Temperatur zu steuern.

Eine erfindungsgemäße Heizkörpervorrichtung umfasst ein Stellglied, das dazu eingerichtet ist, die Heizleistung eines Heizkörpers zu steuern; einen Temperatursensor, der dazu eingerichtet ist, eine Temperatur in einer Umgebung des Heizkörpers zu erfassen; und eine Kommunikationseinheit, die dazu eingerichtet ist, Umgebungstemperaturwerte eines oder mehrerer weiterer Heizkörper zu empfangen. Die Umgebungstemperaturwerte der einen oder mehreren weiteren Heizkörper können beispielsweise von einer zentralen Steuerung und/oder von einer oder mehreren Heizkörpervorrichtungen der einen oder mehreren weiteren Heizkörper empfangen werden.

In manchen Ausführungsformen kann die Kommunikationseinheit dazu eingerichtet sein, eine vom Temperatursensor ermittelte Temperatur und/oder eine Raum-Soll-Temperatur beispielsweise an eine zentrale Steuerung und/oder eine weitere Heizkörpervorrichtung zu übertragen.

Des Weiteren umfasst die Heizkörpervorrichtung eine Einheit zur Vorgabe einer Raum-Soll-Temperatur, die dazu eingerichtet ist, eine Raum-Soll-Temperatur vorzugeben; und eine Steuereinheit, die dazu eingerichtet ist, das Stellglied in Abhängigkeit der Temperatur in der Umgebung des Heizkörpers, in Abhängigkeit der Umgebungstemperaturwerte der einen oder mehreren weiteren Heizkörper und in Abhängigkeit der Raum-Soll-Temperatur zu steuern.

Die Einheit zur Vorgabe der Raum-Soll-Temperatur kann beispielsweise einen Speicher umfassen, in dem ein Raum-Soll-Temperaturwert gespeichert ist, und/oder eine Benutzerschnittstelle, die eine Eingabe eines Raum-Soll-Temperaturwerts durch einen Benutzer ermöglicht. In manchen Ausführungsformen kann die Kommunikationseinheit dazu eingerichtet sein, einen Raum-Soll-Temperaturwert beispielsweise von einer zentralen Steuerung und/oder einer weiteren Heizkörpervorrichtung zu empfangen und der Einheit zur Vorgabe der Raum-Soll-Temperatur bereitzustellen.

Die Steuereinheit kann beispielsweise eine oder mehrere analoge und/oder digitale Schaltungen umfassen.

Die Steuereinheit kann dazu eingerichtet sein, die erfassten Umgebungstemperaturen der Mehrzahl an Heizkörpern miteinander zu vergleichen, wobei das Ansteuern des Stellglieds eines Heizkörpers der Mehrzahl an Heizkörpern zum Steuern der Heizleistung in Abhängigkeit des Ergebnisses des Vergleichs erfolgt. In manchen Ausführungsformen kann die Steuereinheit dazu eine Vergleichseinheit umfassen.

Die Steuereinheit kann dazu eingerichtet sein, Differenzen zwischen der Raum-Soll-Temperatur und den Umgebungstemperaturen der Mehrzahl an Heizkörpern zu ermitteln und die ermittelten Differenzen miteinander zu vergleichen, wobei das Ansteuern des Stellglieds eines Heizkörpers der Mehrzahl an Heizkörpern zum Steuern der Heizleistung des Heizkörpers in Abhängigkeit des Ergebnisses des Vergleichs erfolgt.

In einer besonders flexiblen Ausführungsform kann die Steuereinheit eine dezentrale Steuereinheit sein und/oder dazu eingerichtet sein, nur das Stellglied der Heizkörpervorrichtung, insbesondere kein Stellglied einer weiteren Heizkörpervorrichtung, zu steuern.

Vorteilhafterweise können die einen oder mehreren weiteren Heizkörper mit dem Heizkörper, insbesondere unmittelbar, benachbart sein. Benachbart können Heizkörper beispielsweise aufgrund Ihrer räumlichen Lage zueinander, insbesondere im Vergleich zu weiteren Heizkörpern, sein. In manchen Ausführungsformen können Heizkörper auf Grund einer gemeinsamen Wärmeversorgungsleitung, insbesondere im Vergleich zu weiteren Heizkörpern und deren Wärmeversorgungsleitungen, benachbart sein. In manchen Ausführungsformen können zwei Heizkörper auf Grund einer leitungsgebundenen Signalübertragung zwischen den zwei Heizkörpern als benachbart gelten. Dies kann den Vorteil haben, dass es nicht erforderlich ist, alle Umgebungstemperaturen der Heizkörper in einem Raum für die Steuerung eines Heizkörpers in dem Raum heranzuziehen und dennoch eine effiziente und benutzerfreundliche Regelung der Raumtemperatur zu erzielen.

In einer besonders zielführenden Ausführungsform können die einen oder mehreren weitern Heizkörper mit dem Heizkörper in einem Raum angeordnet sein. Ein Raum kann beispielsweise ein abgegrenzter Raum, ein offener Raum, ein Raumabschnitt etc. sein. Dies kann den Vorteil haben, dass die Regelung einer Temperatur in einem Raum nicht bzw. möglichst wenig durch Parameter eines weiteren Raums beeinflusst wird.

In einer besonders effizienten Ausführungsform kann eine Signalstärke eines Signals von den einen oder mehreren Heizkörpern an der Kommunikationseinheit jeweils eine vorgegebene Referenzsignalstärke übersteigen. Dadurch können auf einfache Art benachbarte Heizkörper ermittelt werden. In manchen Ausführungsformen kann zusätzlich eine Raumrichtung, aus der ein Signal eines Heizkörpers oder ein Signal einer Heizkörpervorrichtung an die Kommunikationseinheit gelangt, zur Ermittlung benachbarter Heizkörper herangezogen werden. In manchen Ausführungsformen kann die Referenzsignalstärke in Abhängigkeit der Raumrichtung variieren.

In manchen Ausführungsformen kann ein Abstand zwischen dem Heizkörper und den weiteren Heizkörpern jeweils unter einem Referenzabstand liegen. In manchen Ausführungsformen kann der Referenzabstand in Abhängigkeit der Raumrichtung variieren. Dies kann den Vorteil haben, dass benachbarte Heizkörper besonders vorteilhaft bestimmt werden können.

In manchen Ausführungsformen kann die Referenzsignalstärke in Abhängigkeit der Signalstärken der Signale von Heizkörpern einer Gruppe von Heizkörpern umfassend die einen oder mehreren Heizkörper mit der Kommunikationseinheit als Auswertepunkt vorgegeben sein und/oder kann der Referenzabstand in Abhängigkeit von Abständen zwischen dem Heizkörper und Heizkörpern einer Gruppe von Heizkörpern umfassend die einen oder mehreren Heizkörper vorgegeben sein.

In besonders zuverlässigen Ausführungsformen können die einen oder mehreren Heizkörper aus einer Gruppe von Heizkörpern in einem Raum so gewählt sein, dass die Umgebungstemperatur eines jeden Heizkörpers der Gruppe von Heizkörpern zum Steuern eines Stellglieds, das dazu eingerichtet ist, die Heizleistung eines weiteren Heizkörpers aus der Gruppe von Heizkörpern zu steuern, herangezogen wird. Dadurch kann eine besonders effiziente Steuerung von Stellgliedern in Abhängigkeit der Temperatur in der Umgebung des Heizkörpers, in Abhängigkeit der Umgebungstemperaturwerte der einen oder mehreren weiteren Heizkörper und in Abhängigkeit der Raum-Soll-Temperatur erfolgen. Dies führt dazu, dass eine Raumregelung in einzelne dezentrale Raumregelungen aufgeteilt werden kann. Der Vorteil dabei ist, dass die Flexibilität der Raumregelung erhöht werden kann, während die Zuverlässigkeit der Raumtemperaturreglung sichergestellt werden kann. Ein weiterer Vorteil ist dabei, dass die Anforderungen an die Steuereinheit hinsichtlich des Speichers und der Rechenleistung sinken und somit die Kosten für die Heizkörpervorrichtung reduziert werden können.

Eine erfindungsgemäße Regelvorrichtung zum Regeln einer Raumtemperatur mittels einer Mehrzahl an Heizkörpern, wobei jeder Heizkörper ein Stellglied zum Steuern der Heizleistung des Heizkörpers und einen Temperatursensor zum Ermitteln einer Temperatur in einer Umgebung des Heizkörpers umfasst, beinhaltet eine Kommunikationseinheit, die dazu eingerichtet ist, Temperaturwerte der Temperatursensoren der Mehrzahl an Heizkörpern zu empfangen und Steuersignale zum Steuern des Stellglieds mindestens eines Heizkörpers der Mehrzahl an Heizkörpern zu übertragen; eine Einheit zur Vorgabe einer Raum-Soll-Temperatur, die dazu eingerichtet ist, eine Raum-Soll-Temperatur vorzugeben; und eine Steuereinheit, die dazu eingerichtet ist, ein Steuersignal in Abhängigkeit der empfangenen Temperaturwerte und in Abhängigkeit der Raum-Soll-Temperatur für mindestens einen Heizkörper der Mehrzahl an Heizkörpern zu erzeugen.

Die Steuereinheit kann beispielsweise eine oder mehrere analoge und/oder digitale Schaltungen umfassen.

Die Steuereinheit kann dazu eingerichtet sein, die erfassten Umgebungstemperaturen der Mehrzahl an Heizkörpern miteinander zu vergleichen, wobei das Ansteuern des Stellglieds eines Heizkörpers der Mehrzahl an Heizkörpern zum Steuern der Heizleistung in Abhängigkeit des Ergebnisses des Vergleichs erfolgt. In manchen Ausführungsformen kann die Steuereinheit dazu eine Vergleichseinheit umfassen.

Die Steuereinheit kann dazu eingerichtet sein, Differenzen zwischen der Raum-Soll-Temperatur und den Umgebungstemperaturen der Mehrzahl an Heizkörpern zu ermitteln und die ermittelten Differenzen miteinander zu vergleichen, wobei das Ansteuern des Stellglieds eines Heizkörpers der Mehrzahl an Heizkörpern zum Steuern der Heizleistung des Heizkörpers in Abhängigkeit des Ergebnisses des Vergleichs erfolgt.

In einer besonders Vorteilhaften Ausführungsform kann die Steuereinheit dazu eingerichtet sein, Steuersignale für die Stellglieder mehrerer Heizkörper der Mehrzahl an Heizkörpern in Abhängigkeit der von den Temperatursensoren der Mehrzahl an Heizkörpern ermittelten Temperaturwerten und in Abhängigkeit der Raum-Soll-Temperatur zu erzeugen. Zudem kann das System eine Kommunikationseinheit umfassen, die dazu eingerichtet ist, die Steuersignale an die Stellglieder der mehreren Heizkörper der Mehrzahl an Heizkörpern zum Steuern der Stellglieder zu übertragen. Dadurch können mehrere Heizkörper mit geringem Rechenaufwand und einem geringen Datendurchsatz gesteuert werden. Dies führt insbesondere bei einer großen Anzahl an Heizkörpern zu verhältnismäßig niedrigen Kosten.

Ein erfindungsgemäßes Softwareprogramm-Produkt umfasst Befehle, die bei der Ausführung des Programms durch ein System, eine Heizkörpervorrichtung oder eine Regelvorrichtung, insbesondere gemäß einem der Ansprüche 11 bis 21, diese(s) veranlassen, ein Verfahren auszuführen umfassend den Schritt Ermitteln eines Steuerwerts für einen Heizkörper einer Mehrzahl an Heizkörpern zum Steuern einer Heizleistung des Heizkörpers in Abhängigkeit einer Temperatur in der Umgebung eines jeden Heizkörpers der Mehrzahl an Heizkörpern und in Abhängigkeit einer Raum-Soll-Temperatur.

Ein besonders vorteilhaftes Softwareprogramm-Produkt kann Befehle umfassen, einen Schritt miteinander Vergleichen der erfassten Umgebungstemperaturen der Mehrzahl an Heizkörpern auszuführen. Das Ansteuern des Stellglieds eines Heizkörpers der Mehrzahl an Heizkörpern zum Steuern der Heizleistung kann dann in Abhängigkeit des Ergebnisses des Vergleichs erfolgen.

In einem besonders fortschrittlichen Softwareprogramm-Produkt kann der Schritt Vergleichen der erfassten Umgebungstemperaturen der Mehrzahl an Heizkörpern miteinander den Schritt Ermitteln von Differenzen zwischen der Raum-Soll-Temperatur und den Umgebungstemperaturen der Mehrzahl an Heizkörpern umfassen, und das Vergleichen der erfassten Umgebungstemperaturen der Mehrzahl an Heizkörpern miteinander durch Vergleichen der ermittelten Differenzen erfolgen.

### Figurenbeschreibung

Fig. 1 zeigt schematisch ein Verfahren gemäß einer Ausführungsform der Erfindung.
Fig. 2 zeigt schematisch ein Verfahren gemäß einer Ausführungsform der Erfindung.
Fig. 3 zeigt schematisch ein System gemäß einer Ausführungsform der Erfindung.
Fig. 4 zeigt schematisch ein System gemäß einer Ausführungsform der Erfindung.
Fig. 5 zeigt schematisch ein System gemäß einer Ausführungsform der Erfindung.
Fig. 6 zeigt schematisch eine Heizkörpervorrichtung gemäß einer Ausführungsform der Erfindung.
Fig. 7 zeigt schematisch eine Regelvorrichtung gemäß einer Ausführungsform der Erfindung.
Fig. 8a und 8b zeigen schematisch das Zusammenwirken zwischen einem Temperaturverlauf in einem Raum und der Steuerung der Heizkörper in dem Raum gemäß einem erfindungsgemäßen Verfahren.
Fig. 9a und 9b zeigen schematisch das Zusammenwirken zwischen einem Temperaturverlauf in einem Raum und der Steuerung der Heizkörper in dem Raum gemäß einem herkömmlichen Verfahren.

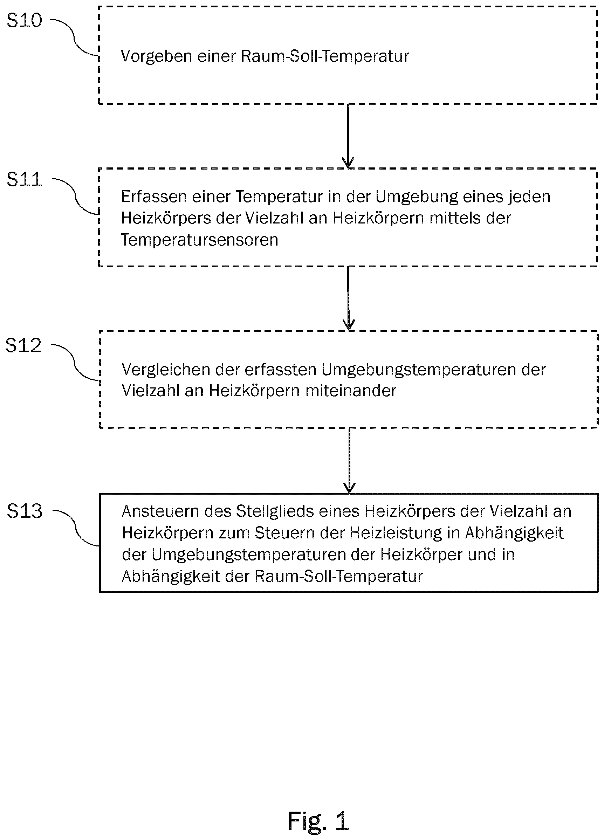

Fig. 1 zeigt schematisch ein Verfahren gemäß einer Ausführungsform der Erfindung. Das Verfahren kann einen ersten optionalen Schritt S10 Vorgeben einer Raumsolltemperatur umfassen. Das Vorgeben einer Raumsolltemperatur kann beispielsweise durch einen Benutzer mittels einer Benutzerschnittstelle erfolgen. In manchen Ausführungsformen kann das Vorgeben einer Raumsolltemperatur durch Auslesen eines Temperaturwertes aus einer Speichereinheit erfolgen. Bei einem Computerprogrammprodukt kann beispielsweise das Vorgeben einer Raumsolltemperatur bereits durch ein Zuweisen eines Wertes zu einer entsprechenden Variablen bzw. durch ein Initialisieren der entsprechenden Variablen erfolgen. Eine Raumsolltemperatur ist vorteilhafterweise ein Temperaturwert, der eine gewünschte Temperatur für einen Raum vorgibt. Vorteilhafterweise kann die Raumsolltemperatur als Regelziel für eine Temperaturregelung eines Raumes verwendet werden.

Das Vorgeben der Raumsolltemperatur kann beispielsweise mittels einer Einheit zur Vorgabe einer Raumsolltemperatur erfolgen.

In einem weiteren optionalen Schritt S11 kann eine Temperatur in der Umgebung eines jeden Heizkörpers einer Mehrzahl an Heizkörpern mittels Temperatursensoren erfasst werden. Das Erfassen einer Temperatur kann ein Bereitstellen eines Sensorsignals, ein Bereitstellen eines Temperaturwertes etc. umfassen. Insbesondere bei einem Computerprogrammprodukt kann das Erfassen einer Temperatur ein Anfordern eines Temperaturwertes/Signals und/oder ein Auslesen eines Temperaturwertes aus einer Speichereinheit umfassen bzw. sein.

Das Erfassen einer Temperatur in der Umgebung eines jeden Heizkörpers der Mehrzahl an Heizkörpern kann beispielsweise mittels Temperatursensoren erfolgen.

In einem optionalen Schritt S12 können die erfassten Umgebungstemperaturen der Mehrzahl an Heizkörpern miteinander verglichen werden. In manchen Ausführungsformen kann das Vergleichen der erfassten Umgebungstemperaturen einen quantitativen Vergleich von Temperaturwerten umfassen. In manchen Ausführungsformen kann das Vergleichen der erfassten Umgebungstemperaturen einen qualitativen Vergleich von Temperaturverläufen der Umgebungstemperaturen der Mehrzahl an Heizkörpern umfassen. Das Vergleichen kann beispielsweise durch eine Vergleichseinheit und/oder eine Recheneinheit, die dazu eingerichtet ist, einen Vergleich durchzuführen, ausgeführt werden.

In manchen Ausführungsformen können die Schritte S10, S11 und/oder S12 optionale Schritte des Verfahrens sein.

In einem Schritt S13 wird ein Stellglied eines Heizkörpers der Mehrzahl an Heizkörpern zum Steuern der Heizungseinheit in Abhängigkeit der Umgebungstemperaturen der Heizkörper angesteuert. Das Ansteuern des Stellglieds kann beispielsweise durch ein Übertragen eines (elektrischen) Signals erfolgen. In manchen Ausführungsformen kann das Ansteuern des Stellgliedes durch ein Bereitstellen einer Versorgungsspannung oder durch eine mechanische Krafteinwirkung erfolgen. Das Ansteuern des Stellglieds kann beispielsweise mittels einer Steuereinheit erfolgen.

Wenn das Verfahren den Schritt S10 umfasst, so kann das Ansteuern des Stellglieds zusätzlich in Abhängigkeit der Raumsolltemperatur erfolgen.

Wenn das Verfahren den Schritt S12 umfasst, so kann das Ansteuern des Stellgliedes eines Heizkörpers der Mehrzahl an Heizkörpern zum Steuern der Heizleistung in Abhängigkeit des Ergebnisses des Vergleichs erfolgen.

Vorteilhafterweise kann das Vergleichen der ermittelten Umgebungstemperaturen und das Ansteuern des Stellglieds des einen Heizkörpers derart erfolgen, so dass der Raum besonders gleichmäßig auf die Raumsolltemperatur erwärmt wird, bzw. im Raum eine möglichst gleichmäßige Temperatur vorliegt, während die Raumtemperatur auf die Raumsolltemperatur geregelt wird.

Das in Fig. 1 gezeigte Verfahren kann beispielsweise in einem System mittels einer oder mehrerer Steuereinheiten ausgeführt werden. In manchen Ausführungsformen kann eine Software (Computerprogrammprodukt) dazu eingerichtet sein, das in Fig. 1 gezeigte Verfahren auszuführen.

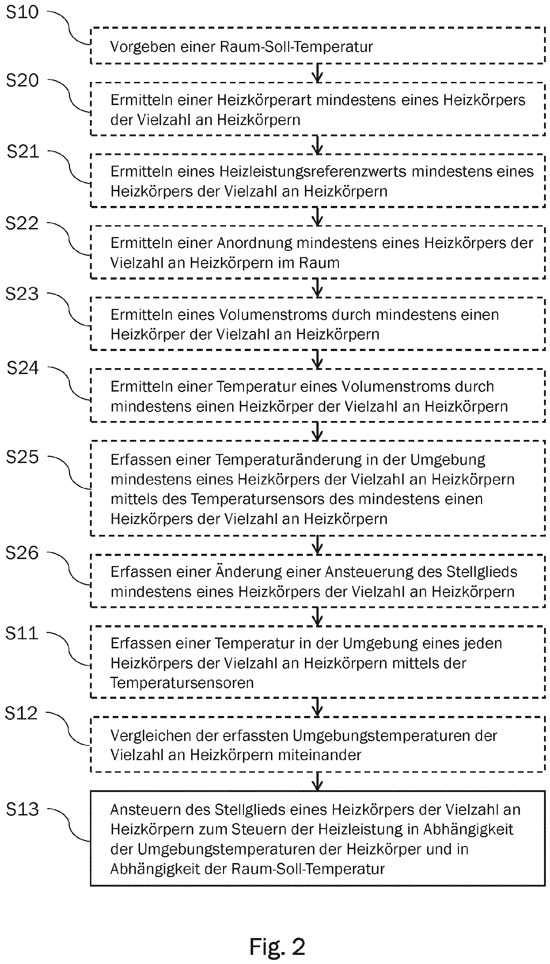

Fig. 2 zeigt schematisch ein Verfahren gemäß einer Ausführungsform der Erfindung. Das in Fig. 2 gezeigte Verfahren unterscheidet sich von dem in Fig. 1 gezeigten Verfahren dahingehend, dass es zusätzlich die Schritte S20 bis S26 umfassen kann, die jeweils optional sind. In Abhängigkeit der optionalen Schritte S20 bis S26 können die Schritte S12 und/oder S13 entsprechend angepasst sein.

In einem optionalen Schritt S20 kann eine Heizkörperart mindestens eines Heizkörpers der Mehrzahl an Heizkörpern ermittelt werden. Dies kann beispielsweise mittels einer Einheit zum Ermitteln einer Heizkörperart (eines Heizkörpertyps) erfolgen.

Heizkörperarten (Heizkörpertypen) können hinsichtlich der Wärmequelle unterschieden werden, wie zum Beispiel einem elektrischen Heizkörper und einem Heizkörper, dem die Wärme durch ein Fluid von einem Wärmeerzeuger, wie einer Feuerungsanlage, einer Wärmepumpe etc., zugeführt wird. Des Weiteren kann zwischen Wärmestrahlern, Konvektoren etc. und einer Mischform davon unterschieden werden. Eine weitere Einteilung von Heizkörpern kann bezüglich der Geometrie erfolgen, wie beispielsweise Plattenheizkörper, Gliederheizkörper, Röhrenheizkörper, Flächenheizungen, wie Fußbodenheizungen und Wandheizungen.

Entsprechend kann das Vergleichen im Schritt S12 der erfassten Umgebungstemperaturen und/oder der Schritt S13 das Ansteuern des Stellglieds, zusätzlich in Abhängigkeit der Heizkörperart des mindestens einen Heizkörpers erfolgen.

In einem optionalen Schritt S21 kann ein Heizleistungsreferenzwert mindestens eines Heizkörpers der Mehrzahl an Heizkörpern ermittelt werden. Dies kann beispielsweise mittels einer Einheit zum Ermitteln eines Heizleistungsreferenzwerts erfolgen.

Das Ermitteln des Heizleistungsreferenzwerts kann beispielsweise durch ein Auswerten von Betriebsdaten in Verbindung mit Umgebungstemperaturwerten des Heizkörpers erfolgen. In manchen Ausführungsformen kann ein Heizleistungsreferenzwert beispielsweise durch Kenndaten des Heizkörpers digital oder analog bereitgestellt werden. In manchen Ausführungsformen kann das Ermitteln des Heizleistungsreferenzwerts des Heizkörpers durch eine Eingabe oder Auswahl eines Heizleistungswerts durch einen Benutzer in eine Benutzerschnittstelle erfolgen.

Das Vergleichen im Schritt S12 der erfassten Umgebungstemperaturen und/oder das Ansteuern des Stellglieds im Schritt S13 kann entsprechend zusätzlich in Abhängigkeit der Heizkörperart des mindestens einen Heizkörpers erfolgen.

In einem optionalen Schritt S22 kann eine Anordnung mindestens eines Heizkörpers der Mehrzahl an Heizkörpern im Raum ermittelt werden. Das Ermitteln einer Anordnung kann ein Ermitteln einer Anordnung des Heizkörpers relativ zu anderen Heizkörpern umfassen. In manchen Ausführungsformen kann das Ermitteln der Anordnung ein Ermitteln einer Anordnung des Heizkörpers relativ zu einer Raumgeometrie, zu Innen- und/oder Außenwänden etc. umfassen. Dies kann beispielsweise mittels einer Einheit zum Ermitteln einer Heizkörperanordnung erfolgen.

Entsprechend kann das Vergleichen im Schritt S12 der erfassten Umgebungstemperaturen und/oder der Schritt S13 das Ansteuern des Stellglieds, zusätzlich in Abhängigkeit der Anordnung des mindestens einen Heizkörpers im Raum erfolgen.

In einem optionalen Schritt S23 kann ein Volumenstrom durch mindestens einen Heizkörper der Mehrzahl an Heizkörpern ermittelt werden. Dies kann beispielsweise mittels einer Einheit zum Ermitteln eines Volumenstroms, insbesondere umfassend einen Volumenstromsensor, ausgeführt werden. Das Vergleichen im Schritt S12 der erfassten Umgebungstemperaturen und/oder der Schritt S13 das Ansteuern des Stellglieds kann zusätzlich in Abhängigkeit des Volumenstroms durch den mindestens einen Heizkörper erfolgen.

In einem optionalen Schritt S24 kann eine Temperatur eines Volumenstroms durch mindestens einen Heizkörper der Mehrzahl an Heizkörpern ermittelt werden. Dies kann beispielsweise mittels eines Temperatursensors einer Einheit zum Ermitteln einer Volumenstromtemperatur durchgeführt werden. Das Vergleichen im Schritt S12 der erfassten Umgebungstemperaturen und/oder der Schritt S13 das Ansteuern des Stellglieds kann zusätzlich in Abhängigkeit der Temperatur des Volumenstroms durch den mindestens einen Heizkörper erfolgen.

In einem optionalen Schritt S25 kann eine Temperaturänderung in der Umgebung mindestens eines Heizkörpers der Mehrzahl an Heizkörpern mittels des Temperatursensors des mindestens einen Heizkörpers der Mehrzahl an Heizkörpern erfasst werden. Das Vergleichen im Schritt S12 der erfassten Umgebungstemperaturen und/oder der Schritt S13 das Ansteuern des Stellglieds kann zusätzlich in Abhängigkeit der Temperaturänderung in der Umgebung des mindestens einen Heizkörpers erfolgen.

In einem optionalen Schritt S26 kann eine Änderung einer Ansteuerung des Stellglieds mindestens eines Heizkörpers der Mehrzahl an Heizkörpern erfasst werden. Dies kann beispielsweise mittels einer Einheit zum Erfassen einer Stellgliedposition bzw. einer Einheit zum Erfassen einer Ansteuerung durchgeführt werden. Das Vergleichen im Schritt S12 der erfassten Umgebungstemperaturen und/oder der Schritt S13 das Ansteuern des Stellglieds kann zusätzlich in Abhängigkeit der Änderung der Ansteuerung des Stellglieds des mindestens einen Heizkörpers erfolgen.

Vorteilhafterweise können die Schritte S25 und S26 zusammengefasst werden, so dass eine Temperaturänderung in der Umgebung mindestens eines Heizkörpers in Abhängigkeit einer Ansteuerung des Stellglieds des mindestens einen Heizkörpers erfasst wird. Dadurch kann ein sogenanntes Ansteuerverhalten des mindestens einen Heizkörpers ermittelt werden und in Abhängigkeit des Ansteuerverhaltens die Steuerung (Regelung) optimiert werden. Dies hat den Vorteil, dass eine Einschwingzeit, bis die Raumtemperatur der Raumsolltemperatur entspricht, verkürzt und ein Überschwingen reduziert werden kann. Ein Ansteuerverhalten kann beispielsweise eine Sprungantwort sein. In manchen Ausführungsformen kann ein Ansteuerverhalten eine Größe für eine Zeitverzögerung und/oder eine Amplitudennormierungsgröße beinhalten.

In manchen Ausführungsformen kann das Vergleichen der Erfassten Umgebungstemperaturen ein Vergleichen der Heizkörperart, des Heizleistungsreferenzwerts, der Anordnung, des Volumenstroms, der Volumenstromtemperatur und/oder des Ansteuerverhaltens mindestens zweier Heizkörper der Mehrzahl an Heizkörper umfassen. In manchen Ausführungsformen können Vergleiche verschiedener Variablen/Parameter beispielsweise mittels eines Punktesystems und/oder einer mathematischen Formel zusammengefasst werden
In manchen Ausführungsformen können Schritte der in den Fig. 1 und 2 gezeigten Verfahren vertauscht, modifiziert, parallel ausgeführt sowie in ihrer Reihenfolge verändert werden, ohne dass der Kern der Erfindung verloren geht. In manchen Ausführungsformen können Schritte geteilt oder zusammengefasst werden.

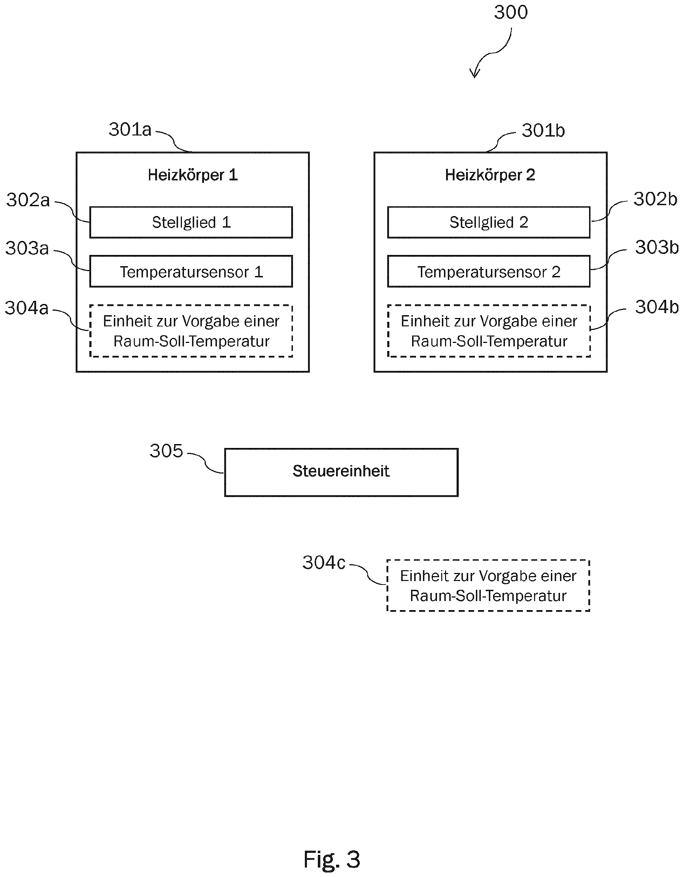

Fig. 3 zeigt schematisch ein System gemäß einer Ausführungsform der Erfindung. Das System 300 umfasst einen ersten Heizkörper 301a und einen zweiten Heizkörper 301b. Der erste Heizkörper 301a umfasst ein Stellglied 302a und einen Temperatursensor 303a. Der zweite Heizkörper umfasst ein Stellglied 302b und einen Temperatursensor 303b. In dem System können eine oder mehrere Einheiten zur Vorgabe einer Raumsolltemperatur 304a, 304b, 304c als Teile eines oder mehrerer Heizkörper 301a, 301b und/oder gesondert angeordnet sein.

Des Weiteren umfasst das System 300 eine Steuereinheit 305, die dazu eingerichtet ist, ein Stellglied 302a, 302b der Heizkörper 301a bzw. 301b in Abhängigkeit der von den Temperatursensoren 303a und 303b bereitgestellten Temperaturwerte anzusteuern.

Vorteilhafterweise kann die Steuereinheit dazu eingerichtet sein, die von den Temperatursensoren 303a und 303b bereitgestellten Temperaturwerte zu vergleichen und ein Stellglied 302a, 302b der Heizkörper 301a, 301b in Abhängigkeit des Vergleichs anzusteuern. Vorteilhafterweise kann die Steuereinheit derart ausgebildet sein, ein Stellglied 302a, 302b der Heizkörper 301a, 301b derart anzusteuern, dass Umgebungstemperaturen der Heizkörper 301a, 301b aneinander angepasst werden und/oder die Raumtemperatur auf eine von der Einheit zur Vorgabe einer Raumsolltemperatur bereitgestellten Raumsolltemperatur zu regeln.

Die in Fig. 3 gezeigten Einheiten können dazu entsprechend drahtlos und/oder leitungsgebunden miteinander verbunden sein.

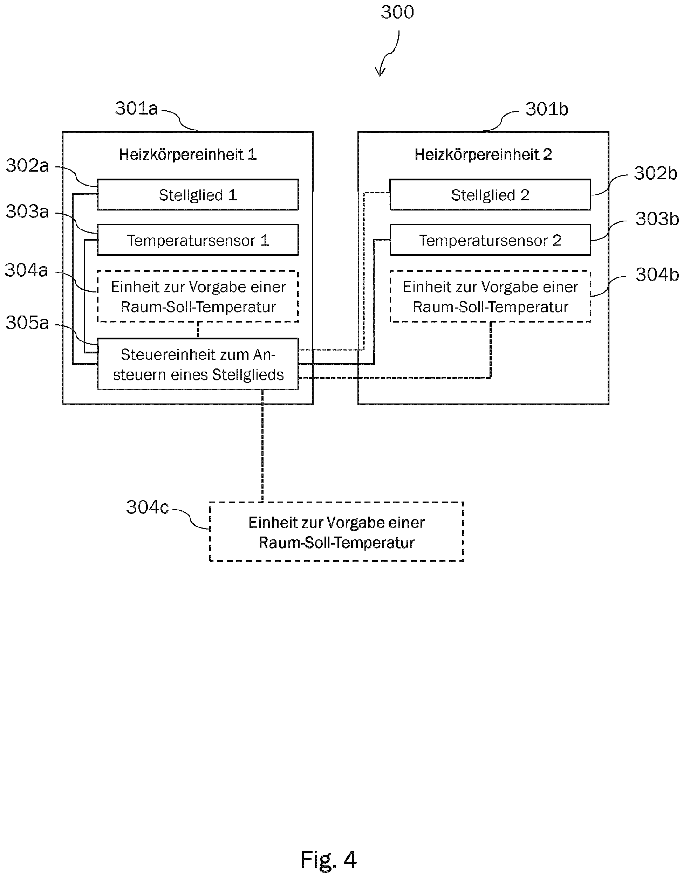

Fig. 4 zeigt schematisch ein System gemäß einer Ausführungsform der Erfindung. Das in Fig. 4 gezeigte System basiert auf dem in Fig. 3 gezeigten System und unterscheidet sich von dem in Fig. 3 gezeigten System 300 dahingehend, dass die Steuereinheit zum Ansteuern eines Stellglieds der Heizkörper 301a, 301b Teil des Heizkörpers 301a ist.

Analog zu Fig. 3 kann die Einheit zur Vorgabe einer Raumsolltemperatur 304a, 304b, 304c wahlweise Teil eines Heizkörpers 301a, 301b sein und/oder separat angeordnet sein.

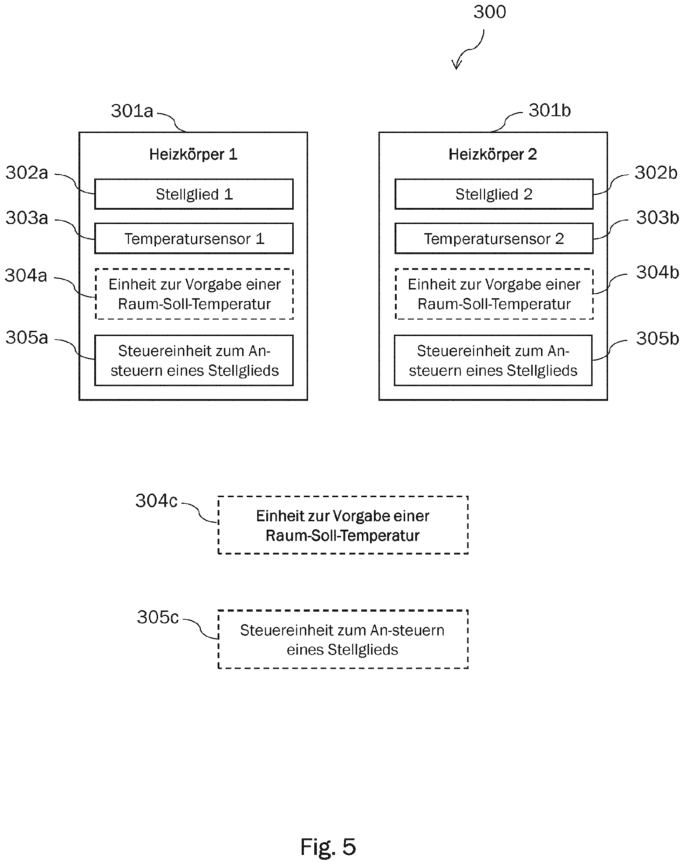

Fig. 5 zeigt schematisch ein System gemäß einer Ausführungsform der Erfindung. Das in Fig. 5 gezeigte System 300 basiert auf dem in Fig. 4 gezeigten System 300. Das in Fig. 5 gezeigte System 300 unterscheidet sich von dem in Fig. 4 gezeigten System 300 dahingehend, dass auch der Heizkörper 301b eine Steuereinheit 305b umfassen kann. In manchen Ausführungsformen kann des Weiteren wie in Fig. 5 gezeigt auch gesondert eine Steuereinheit 305c, insbesondere mit einer Einheit zur Vorgabe einer Raumsolltemperatur 304c, in dem System 300 vorhanden sein. In manchen Ausführungsformen kann, wenn mehrere Steuereinheiten zum Ansteuern eines Stellglieds im System 300 vorhanden sind, eine Steuereinheit 305a; 305b dazu eingerichtet sein, das Stellglied 302a; 302b des jeweiligen Heizkörpers 301a; 301b in Abhängigkeit der von den Temperatursensoren 303a, 303b bereitgestellten Umgebungstemperaturwerte anzusteuern.

In manchen Ausführungsformen können die Steuereinheiten 305a, 305b, 305c dazu eingerichtet sein, eine Master-Slave-Beziehung einzugehen, so dass eine der Steuereinheiten 305a, 305b, 305c dazu eingerichtet ist, sowohl das Stellglied 302a als auch das Stellglied 302b anzusteuern. In manchen Ausführungsformen können Kommunikationseinheiten vorhanden sein, so dass ein entsprechender Austausch von Daten, insbesondere Temperaturwerten und Steuersignalen/Steuerdaten möglich ist.

Die in Fig. 5 gezeigten Einheiten können dazu entsprechend drahtlos oder leitungsgebunden miteinander verbunden sein.

Die in den Fig. 3 bis 5 gezeigten Systeme können insbesondere dazu eingerichtet sein, in den Fig. 1 und 2 gezeigte Schritte eines Verfahrens auszuführen.

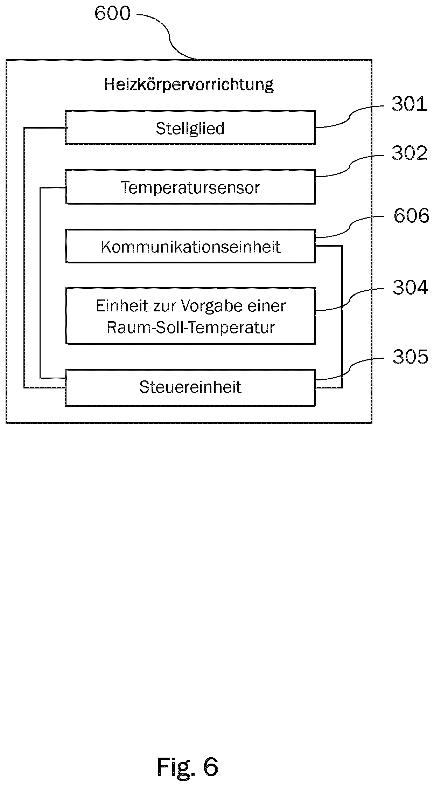

Fig. 6 zeigt schematisch eine Heizkörpervorrichtung gemäß einer Ausführungsform der Erfindung. Die Heizkörpervorrichtung 600 kann insbesondere ein so genannter Thermostat/Heizkörperthermostat/Heizungsthermostat sein. Die in Fig. 6 gezeigte Heizkörpervorrichtung 600 umfasst ein Stellglied 301, einen Temperatursensor 302, eine Kommunikationseinheit 606, eine Einheit zur Vorgabe einer Raumsolltemperatur 304 und eine Steuereinheit 305.

Das Stellglied 301 ist dazu eingerichtet, die Heizleistung eines Heizkörpers zu steuern. Vorteilhafterweise wird dazu die Heizkörpervorrichtung mit dem Heizkörper derart in Verbindung gebracht, so dass ein Durchfluss eines Wärmeträgers durch den Heizkörper seitens des Stellglieds gesteuert wird, bzw. eine Umwandlung von elektrischer Energie in Wärmeenergie in dem Heizkörper seitens des Stellglieds gesteuert wird. Der Temperatursensor 302 ist dazu eingerichtet, eine Temperatur in einer Umgebung des Heizkörpers zu erfassen. Die Kommunikationseinheit 606 ist dazu eingerichtet, Umgebungstemperaturwerte weiterer Heizkörper zu empfangen.

Die Einheit zur Vorgabe einer Raumsolltemperatur 304 ist dazu eingerichtet, eine Raumsolltemperatur vorzugeben. Die Einheit zur Vorgabe einer Raumsolltemperatur kann dazu beispielsweise eine Speichereinheit umfassen, aus der die Raumsolltemperatur ausgelesen wird. In manchen Ausführungsformen kann die Einheit zur Vorgabe einer Raumsolltemperatur mit der Kommunikationseinheit verbunden sein, so dass eine Raumsolltemperatur von einer weiteren Einheit/Vorrichtung/System empfangen werden kann. In manchen Ausführungsformen kann die Einheit zur Vorgabe einer Raumsolltemperatur eine Mensch-Maschine-Schnittstelle umfassen, so dass eine Raumsolltemperatur durch eine Eingabe eines Benutzers vorgegeben wird.

Die Steuereinheit 305 ist dazu eingerichtet, ein Stellglied, insbesondere das Stellglied 301 in Abhängigkeit der Temperatur in der Umgebung des Heizkörpers, in Abhängigkeit der Umgebungstemperaturwerte der weiteren Heizkörper und in Abhängigkeit der Raumsolltemperatur zu steuern. Die Steuereinheit 305 kann dabei insbesondere dazu eingerichtet sein, die erfasste Umgebungstemperatur und die Umgebungstemperaturen der weiteren Heizkörper miteinander zu vergleichen und das Stellglied 301 in Abhängigkeit des Vergleichs anzusteuern.

Vorteilhafterweise ist die Heizkörpervorrichtung 600 dazu eingerichtet, insbesondere in Verbindung mit weiteren Heizkörpervorrichtungen und/oder in Verbindung mit einem in den Fig. 3 bis 4 gezeigten Heizkörper, in den Fig. 1 und 2 gezeigte Schritte eines Verfahrens auszuführen.

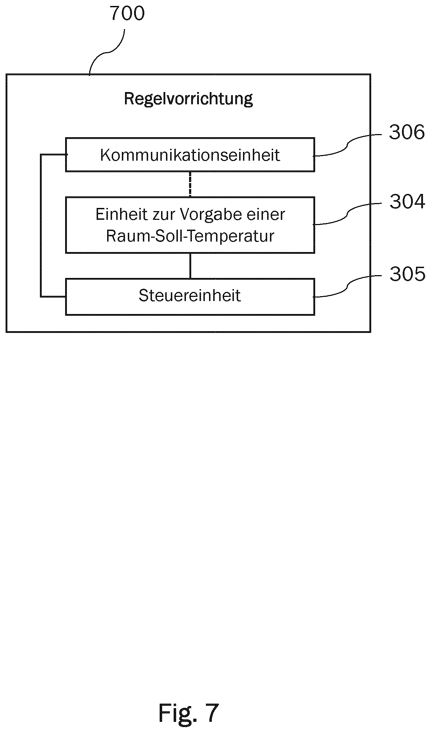

Fig. 7 zeigt schematisch eine Regelvorrichtung gemäß einer Ausführungsform der Erfindung. Die Regelvorrichtung 700 umfasst eine Kommunikationseinheit 306, eine Einheit zur Vorgabe einer Raumsolltemperatur 304 und eine Steuereinheit 305. Die Kommunikationseinheit 306 ist dazu eingerichtet, Temperaturwerte von Temperatursensoren einer Mehrzahl an Heizkörpern zu empfangen und Steuersignale zum Steuern eines Stellglieds mindestens eines Heizkörpers der Mehrzahl an Heizkörpern zu übertragen. Das Empfangen und Übertragen von Signalen und Daten kann dabei kabellos und/oder leitungsgebunden erfolgen. Vorteilhafterweise umfassen die empfangenen Temperaturwerte Umgebungstemperaturwerte der Mehrzahl an Heizkörpern.

Die Einheit zur Vorgabe einer Raumsolltemperatur 304 ist dazu eingerichtet, eine Raumsolltemperatur vorzugeben. Die Einheit zur Vorgabe einer Raumsolltemperatur kann dazu beispielsweise eine Speichereinheit umfassen, aus der die Raumsolltemperatur ausgelesen wird. In manchen Ausführungsformen kann die Einheit zur Vorgabe einer Raumsolltemperatur mit der Kommunikationseinheit verbunden sein, so dass eine Raumsolltemperatur von einer weiteren Einheit empfangen werden kann. In manchen Ausführungsformen kann die Einheit zur Vorgabe einer Raumsolltemperatur eine Mensch-Maschine-Schnittstelle umfassen, so dass eine Raumsolltemperatur durch eine Eingabe eines Benutzers vorgegeben wird.

Die Steuereinheit ist dazu eingerichtet, das Stellglied des mindestens einen Heizkörpers in Abhängigkeit der Umgebungstemperaturwerte der Mehrzahl an Heizkörpern und in Abhängigkeit der Raumsolltemperatur zu steuern. Die Steuereinrichtung kann insbesondere dazu eingerichtet sein, die Umgebungstemperaturen der Mehrzahl an Heizkörpern miteinander zu vergleichen und das Stellglied des mindestens einen Heizkörpers in Abhängigkeit des Vergleichs anzusteuern.

In manchen Ausführungsformen können Einheiten der in den Fig. 3 bis 5 gezeigten Systeme, der in Fig. 6 gezeigten Heizkörpervorrichtung bzw. der in Fig. 7 gezeigten Regelvorrichtung zusammengefasst, aufgeteilt, hinzugefügt und/oder weggelassen werden, ohne den Kern der Erfindung zu beeinflussen.

In manchen Ausführungsformen kann eine Raumtemperatur mittels der in der Umgebung der Heizkörper erfassten Temperaturen ermittelt werden. In manchen Ausführungsformen können stattdessen oder zusätzlich ein oder mehrere gesonderte Temperatursensoren zum Erfassen der Raumtemperatur in dem Raum angeordnet sein.

Vorteilhafterweise ist die Regelvorrichtung dazu eingerichtet, in Verbindung mit Heizkörpern, insbesondere in Verbindung mit in den Fig. 3 bis 5 gezeigten Heizkörpern, ein in den Fig. 1 und 2 gezeigtes Verfahren auszuführen.

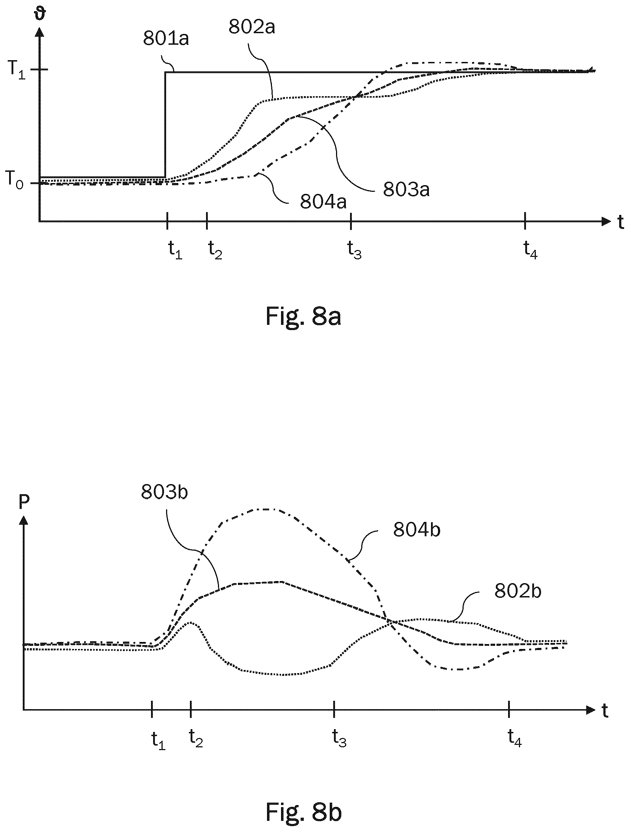

Fig. 8a und 8b zeigen schematisch das Zusammenwirken zwischen einem Temperaturverlauf in einem Raum und der Steuerung der Heizkörper in dem Raum gemäß einem erfindungsgemäßen Verfahren. Im in Fig. 8a gezeigten Diagramm ist über die X-Achse die Zeit aufgetragen und über die Y-Achse die Temperatur. Im in Fig. 8b gezeigten Diagramm ist über die X-Achse ebenfalls die Zeit aufgetragen und über die Y-Achse eine Ansteuerung der Heizkörper. Der Graph 801a stellt die Raumsolltemperatur in Abhängigkeit der Zeit dar. Der Graph 802a gibt einen Temperaturverlauf in einer Umgebung eines ersten Heizkörpers wieder und der Graph 804a einen Temperaturverlauf in der Umgebung eines zweiten Heizkörpers. Der Graph 803a gibt den Temperaturverlauf in Abhängigkeit der Zeit der Raumtemperatur wieder.

Wie in Fig. 8a ersichtlich, kann die Raumtemperatur in besonders eleganten Ausführungsformen mittels der Umgebungstemperaturen der Heizkörper, beispielsweise durch Bilden eines Mittelwerts, ermittelt werden. Der Graph 802b gibt den Verlauf eines Steuersignals eines ersten Stellglieds in Abhängigkeit der Zeit wieder. Der Graph 804b gibt den Verlauf eines zweiten Steuersignals für ein zweites Stellglied in Abhängigkeit der Zeit wieder. Der Graph 803b ist der Mittelwert der Ansteuersignale für das erste Stellglied und für das zweite Stellglied.

Das erste Stellglied steuert die Heizleistung des ersten Heizkörpers und das zweite Stellglied steuert die Heizleistung des zweiten Heizkörpers.

Wie in Fig. 8a ersichtlich, wird die Raumsolltemperatur zum Zeitpunkt t1 von einem Wert TO auf einen Wert T1 erhöht. In Fig. 8b ist ersichtlich, dass aufgrund dessen die Ansteuerung der Stellglieder erhöht wird, so dass die Heizleistung des ersten und zweiten Heizkörpers erhöht wird, so dass die Raumtemperatur an die Raumsolltemperatur angepasst wird.

In Fig. 8a ist ersichtlich, dass sich die Temperatur in der Umgebung des ersten Heizkörpers wesentlich schneller an die Raumsolltemperatur anpasst als die Temperatur in der Umgebung des zweiten Heizkörpers, insbesondere zum Zeitpunkt t2. Als Folge dessen wird die Ansteuerung des ersten Heizkörpers 802b reduziert und die Ansteuerung des zweiten Heizkörpers 804b erhöht, so dass die Heizleistung des ersten Heizkörpers reduziert wird und die Heizleistung des zweiten Heizkörpers erhöht wird. Infolgedessen gleichen sich die Temperaturen in den Umgebungen des ersten und des zweiten Heizkörpers wieder an, siehe insbesondere den Bereich zwischen den Zeitpunkten t2 und t3. Schließlich wird die Raumtemperatur im gesamten Raum gleichermaßen auf die Raumsolltemperatur geregelt, siehe insbesondere zum Zeitpunkt t4.

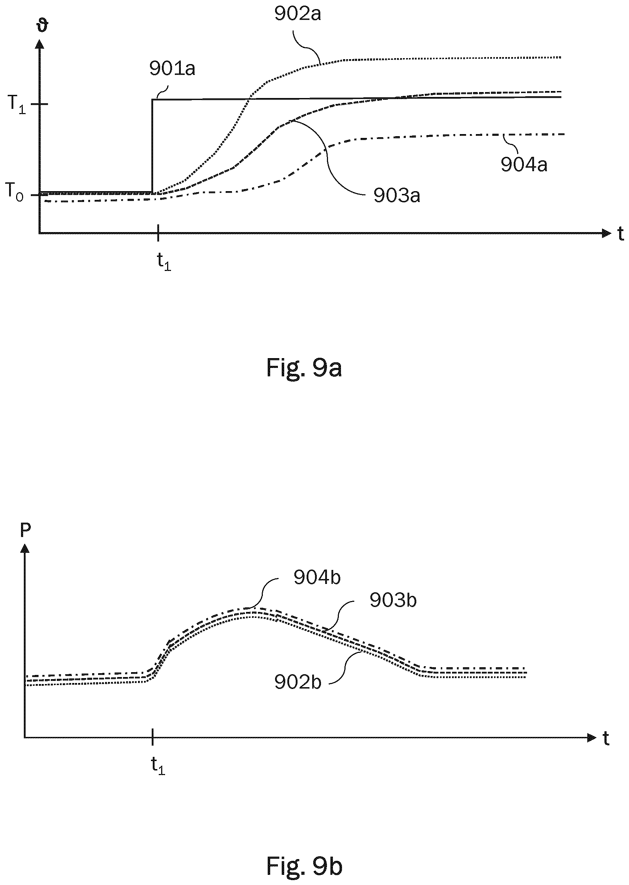

Fig. 9a und 9b zeigen schematisch das Zusammenwirken zwischen einem Temperaturverlauf in einem Raum und der Steuerung der Heizkörper in dem Raum gemäß einem herkömmlichen Verfahren. Im in Fig. 9a gezeigten Diagramm ist über die X-Achse die Zeit aufgetragen und über die Y-Achse die Temperatur. Im in Fig. 9b gezeigten Diagramm ist über die X-Achse ebenfalls die Zeit aufgetragen und über die Y-Achse eine Ansteuerung der Heizkörper. Der Graph 901a stellt die Raumsolltemperatur in Abhängigkeit der Zeit dar. Der Graph 902a gibt einen Temperaturverlauf in einer Umgebung eines ersten Heizkörpers wieder und der Graph 904a einen Temperaturverlauf in der Umgebung eines zweiten Heizkörpers. Der Graph 903a gibt den Temperaturverlauf in Abhängigkeit der Zeit der Raumtemperatur wieder.

Der Graph 902b gibt den Verlauf eines Steuersignals eines ersten Stellglieds in Abhängigkeit der Zeit wieder. Der Graph 904b gibt den Verlauf eines zweiten Steuersignals für ein zweites Stellglied in Abhängigkeit der Zeit wieder. Der Graph 903b ist der Mittelwert der Ansteuersignale für das erste Stellglied und für das zweite Stellglied.

Das erste Stellglied steuert die Heizleistung des ersten Heizkörpers und das zweite Stellglied steuert die Heizleistung des zweiten Heizkörpers.

Analog zu Fig. 8a wird in Fig. 9a die Raumsolltemperatur zum Zeitpunkt t1 von einer Temperatur TO auf eine Temperatur T1 erhöht. Aufgrund dessen wird die Ansteuerung des ersten Stellglieds und des zweiten Stellglieds erhöht, so dass sich die Heizleistung des ersten Heizkörpers und die Heizleistung des zweiten Heizkörpers erhöhen. Infolgedessen steigt die Temperatur in der Umgebung des ersten Heizkörpers und der Umgebung des zweiten Heizkörpers. Aufgrund unterschiedlicher Heizkörperarten, baulicher Unterschiede der Wände, Innen- und Außenwände, an denen die Heizkörper positioniert sind, Sonneneinstrahlung etc. steigt die Temperatur in der Umgebung des ersten Heizkörpers schneller als in der Umgebung des zweiten Heizkörpers. Infolgedessen wird zwar die Raumtemperatur auf die Raumsolltemperatur geregelt, jedoch bilden sich deutlich erkennbare Temperaturunterschiede im Raum aus, was zu unangenehmen Luftzirkulationen führen kann.

Die in den Figuren 1 bis 7 gezeigten Ausführungsformen können in manchen Ausführungen vorteilhaft weitergebildet werden.

So können die Heizkörper, deren Umgebungstemperatur zur Ansteuerung eines Stellglieds eines Heizkörpers herangezogen wird, mit dem Heizkörper, dessen Stellglied angesteuert wird, insbesondere unmittelbar, benachbart sein. Benachbart können Heizkörper beispielsweise aufgrund Ihrer räumlichen Lage zueinander, insbesondere im Vergleich zu weiteren Heizkörpern, sein. In manchen Ausführungsformen können Heizkörper auf Grund einer gemeinsamen Wärmeversorgungsleitung, insbesondere im Vergleich zu weiteren Heizkörpern und deren Wärmeversorgungsleitungen, benachbart sein. In manchen Ausführungsformen können zwei Heizkörper auf Grund einer leitungsgebundenen Signalübertragung zwischen den zwei Heizkörpern als benachbart gelten. Dies kann den Vorteilhaben, dass es nicht erforderlich ist, alle Umgebungstemperaturen der Heizkörper in einem Raum für die Steuerung eines Heizkörpers in dem Raum heranzuziehen und dennoch eine effiziente und benutzerfreundliche Regelung der Raumtemperatur zu erzielen.

Vorteilhafterweise können befinden sich die Heizkörper, deren Umgebungstemperatur zur Ansteuerung eines Stellglieds eines Heizkörpers herangezogen werden, mit dem Heizkörper, dessen Stellglied angesteuert wird in einem Raum. Ein Raum kann beispielsweise ein abgegrenzter Raum, ein offener Raum, ein Raumabschnitt etc. sein. Dies kann den Vorteil haben, dass die Regelung einer Temperatur in einem Raum nicht bzw. möglichst wenig durch Parameter eines weiteren Raums beeinflusst wird.

In einer besonders effizienten Ausführungsform kann eine Signalstärke eines Signals von einer Mehrzahl an Heizkörpern an der Kommunikationseinheit jeweils eine vorgegebene Referenzsignalstärke übersteigen. Dadurch können auf einfache Art benachbarte Heizkörper ermittelt werden. In manchen Ausführungsformen kann zusätzlich eine Raumrichtung, aus der ein Signal eines Heizkörpers oder ein Signal einer Heizkörpervorrichtung an die Kommunikationseinheit gelangt, zur Ermittlung benachbarter Heizkörper herangezogen werden.

In manchen Ausführungsformen kann ein Abstand zwischen dem Heizkörper und den weiteren Heizkörpern jeweils unter einem Referenzabstand liegen. In manchen Ausführungsformen kann der Referenzabstand in Abhängigkeit der Raumrichtung variieren. Dies kann den Vorteil haben, dass benachbarte Heizkörper besonders vorteilhaft bestimmt werden können.

In besonders zuverlässigen Ausführungsformen können die Heizkörper, deren Umgebungstemperatur zur Ansteuerung des Stellglieds eines Heizkörpers herangezogen wird, aus einer Gruppe von Heizkörpern in einem Raum so gewählt sein, dass die Umgebungstemperatur eines jeden Heizkörpers der Gruppe von Heizkörpern zum Steuern eines Stellglieds, das dazu eingerichtet ist, die Heizleistung eines weiteren Heizkörpers der Gruppe von Heizkörpern zu steuern, herangezogen wird. Dadurch kann eine besonders effiziente Steuerung von Stellgliedern in Abhängigkeit der Temperatur in der Umgebung des Heizkörpers, in Abhängigkeit der Umgebungstemperaturwerte der einen oder mehreren weiteren Heizkörper und in Abhängigkeit der Raum-Soll-Temperatur erfolgen. Dies führt dazu, dass eine Raumregelung in einzelne dezentrale Raumregelungen aufgeteilt werden kann. Der Vorteil dabei ist, dass die Flexibilität der Raumregelung erhöht werden kann, während die Zuverlässigkeit der Raumtemperaturreglung sichergestellt werden kann. Ein weiterer Vorteil ist dabei, dass die Anforderungen an die Steuereinheit hinsichtlich eines Speichers und einer Recheneinheit verringert werden können.

## Patentansprüche

1. Verfahren zum Regeln einer Temperatur in einem Raum, in dem eine Mehrzahl an Heizkörpern (301a, 301b) angeordnet ist, wobei jeder der Heizkörper (301a, 301b) ein Stellglied (302a, 302b) zum Steuern einer Heizleistung des jeweiligen Heizkörpers (301a, 301b) der Mehrzahl an Heizkörpern (301a, 301b) und einen Temperatursensor (303a, 303b) zum Ermitteln einer Temperatur in einer Umgebung des jeweiligen Heizkörpers (301a, 301b) der Mehrzahl an Heizkörpern (301a, 301b) aufweist, umfassend die Schritte:
- Vorgeben einer Raum-Soll-Temperatur (304a, 304b, 304c),
- Erfassen einer jeweiligen Temperatur in der Umgebung eines jeden Heizkörpers (301a, 301b) der Mehrzahl an Heizkörpern (301a, 301b) mittels der Temperatursensoren (303a, 303b) als Umgebungstemperatur des jeweiligen Heizkörpers (301a, 301b),
- Ermitteln eines Heizleistungsreferenzwerts mindestens eines Heizkörpers (301a, 301b) der Mehrzahl an Heizkörpern (301a, 301b), und
- Ansteuern des Stellglieds (302a, 302b) eines Heizkörpers (301a, 301b) der Mehrzahl an Heizkörpern (301a, 301b) zum Steuern der Heizleistung in Abhängigkeit der vorgegebenen Raum-Soll-Temperatur (304a, 304b, 304c), der erfassten Umgebungstemperaturen der Mehrzahl an Heizkörpern (301a, 301b) und des ermittelten Heizleistungsreferenzwerts des mindestens einen Heizkörpers (301a, 301b) der Mehrzahl an Heizkörpern (301a, 301b).

2. Verfahren nach Anspruch 1, wobei
der Schritt Ansteuern des Stellglieds (302a, 302b) mittels einer zentralen Einheit für die Stellglieder (302a, 302b) mehrerer Heizkörper (301a, 301b), insbesondere aller Heizkörper (301a, 301b), der Mehrzahl an Heizkörpern (301a, 301b) ausgeführt wird.

3. Verfahren nach Anspruch 1, wobei
der Schritt Ansteuern des Stellglieds (302a, 302b) mittels mehrerer dezentraler Einheiten, insbesondere mittels jeweils einer dezentralen Einheit, für die Stellglieder (302a, 302b) mehrerer Heizkörper (301a, 301b), insbesondere aller Heizkörper (301a, 301b), der Mehrzahl an Heizkörpern (301a, 301b) ausgeführt wird.

4. Verfahren nach einem der Ansprüche 1 bis 3 umfassend den zusätzlichen Schritt:
Vergleichen der erfassten Umgebungstemperaturen der Mehrzahl an Heizkörpern (301a, 301b) miteinander, umfassend den Schritt Ermitteln von Differenzen zwischen der Raum-Soll-Temperatur (304a, 304b, 304c) und den Umgebungstemperaturen der Mehrzahl an Heizkörpern (301a, 301b), wobei
das Vergleichen der erfassten Umgebungstemperaturen der Mehrzahl an Heizkörpern (301a, 301b) miteinander durch Vergleichen der ermittelten Differenzen erfolgt, und
das Ansteuern des Stellglieds (302a, 302b) eines Heizkörpers (301a, 301b) der Mehrzahl an Heizkörpern (301a, 301b) zum Steuern der Heizleistung in Abhängigkeit des Ergebnisses des Vergleichs erfolgt.

5. Verfahren nach einem der Ansprüche 1 bis 4 umfassend den zusätzlichen Schritt:
Ermitteln einer Heizkörperart mindestens eines Heizkörpers (301a, 301b) der Mehrzahl an Heizkörpern (301a, 301b), wobei
das Ansteuern des Stellglieds (302a, 302b) des einen Heizkörpers (301a, 301b) der Mehrzahl an Heizkörpern (301a, 301b) zusätzlich in Abhängigkeit der Heizkörperart des mindestens einen Heizkörpers (301a, 301b) der Mehrzahl an Heizkörpern (301a, 301b) erfolgt.

6. Verfahren nach einem der Ansprüche 1 bis 5 umfassend einen oder mehrere der folgenden zusätzlichen Schritte:
- Ermitteln einer Anordnung mindestens eines Heizkörpers (301a, 301b) der Mehrzahl an Heizkörpern (301a, 301b) im Raum, wobei das Ansteuern des Stellglieds (302a, 302b) des einen Heizkörpers (301a, 301b) der Mehrzahl an Heizkörpern (301a, 301b) zusätzlich in Abhängigkeit der Anordnung im Raum des mindestens einen Heizkörpers (301a, 301b) der Mehrzahl an Heizkörpern (301a, 301b) erfolgt;
- Ermitteln eines Volumenstroms durch mindestens einen Heizkörper (301a, 301b) der Mehrzahl an Heizkörpern (301a, 301b), wobei das Ansteuern des Stellglieds (302a, 302b) des einen Heizkörpers (301a, 301b) der Mehrzahl an Heizkörpern (301a, 301b) zusätzlich in Abhängigkeit des ermittelten Volumenstroms des mindestens einen Heizkörpers (301a, 301b) der Mehrzahl an Heizkörpern (301a, 301b) erfolgt;
- Ermitteln einer Temperatur eines Volumenstroms durch mindestens einen Heizkörper (301a, 301b) der Mehrzahl an Heizkörpern (301a, 301b), wobei das Ansteuern des Stellglieds (302a, 302b) des einen Heizkörpers (301a, 301b) der Mehrzahl an Heizkörpern (301a, 301b) zusätzlich in Abhängigkeit der ermittelten Temperatur des Volumenstroms durch den mindestens einen Heizkörper (301a, 301b) der Mehrzahl an Heizkörpern (301a, 301b) erfolgt;
- Erfassen einer Temperaturänderung in der Umgebung mindestens eines Heizkörpers (301a, 301b) der Mehrzahl an Heizkörpern (301a, 301b) mittels des Temperatursensors (303a, 303b) des mindestens einen Heizkörpers (301a, 301b) der Mehrzahl an Heizkörpern (301a, 301b), wobei das Ansteuern des Stellglieds (302a, 302b) des einen Heizkörpers (301a, 301b) der Mehrzahl an Heizkörpern (301a, 301b) in Abhängigkeit der erfassten Temperaturänderung erfolgt;
- Erfassen einer Änderung einer Ansteuerung des Stellglieds (302a, 302b) mindestens eines Heizkörpers (301a, 301b) der Mehrzahl an Heizkörpern (301a, 301b), wobei das Ansteuern des Stellglieds (302a, 302b) des einen Heizkörpers (301a, 301b) der Mehrzahl an Heizkörpern (301a, 301b) in Abhängigkeit der erfassten Änderung der Ansteuerung erfolgt.

7. Heizkörpervorrichtung (600) umfassend:
ein Stellglied (301), das dazu eingerichtet ist, die Heizleistung eines Heizkörpers zu steuern;
einen Temperatursensor (302), der dazu eingerichtet ist, eine Temperatur in einer Umgebung des Heizkörpers zu erfassen;
eine Kommunikationseinheit (606), die dazu eingerichtet ist, Umgebungstemperaturwerte eines oder mehrerer weiterer Heizkörper zu empfangen;
eine Einheit (304) zur Vorgabe einer Raum-Soll-Temperatur, die dazu eingerichtet ist, eine Raum-Soll-Temperatur vorzugeben;
eine Steuereinheit (305), die dazu eingerichtet ist, das Stellglied (301) in Abhängigkeit der vorgegebenen Raum-Soll-Temperatur, der erfasstem Temperatur in der Umgebung des Heizkörpers und von den empfangenen Umgebungstemperaturwerten der einen oder mehreren weiteren Heizkörper und eines ermittelten Heizleistungsreferenzwerts von mindestens einem der ein oder mehreren Heizkörper zu steuern.

8. Heizkörpervorrichtung (600) nach Anspruch 7, wobei
die Steuereinheit (305) eine dezentrale Steuereinheit ist und/oder dazu eingerichtet ist, nur das Stellglied (301) der Heizkörpervorrichtung (600), insbesondere kein Stellglied einer weiteren Heizkörpervorrichtung, zu steuern.

9. Heizkörpervorrichtung (600) nach einem der Ansprüche 7 oder 8, wobei
eine Signalstärke eines Signals von den einen oder mehreren Heizkörpern an der Kommunikationseinheit (606) jeweils eine vorgegebene Referenzsignalstärke übersteigt und/oder ein Abstand zwischen dem Heizkörper und den weiteren Heizkörpern jeweils unter einem Referenzabstand liegt,
wobei die Referenzsignalstärke in Abhängigkeit der Signalstärken der Signale von Heizkörpern einer Gruppe von Heizkörpern umfassend die einen oder mehreren Heizkörper mit der Kommunikationseinheit (606) als Auswertepunkt vorgegeben ist und/oder
der Referenzabstand in Abhängigkeit von Abständen zwischen dem Heizkörper und Heizkörpern einer Gruppe von Heizkörpern umfassend die einen oder mehreren Heizkörper vorgegeben ist.

10. Heizkörpervorrichtung (600) nach einem der Ansprüche 7 bis 9, wobei
die einen oder mehreren Heizkörper aus einer Gruppe von Heizkörpern in einem Raum so gewählt sind, dass die Umgebungstemperatur eines jeden Heizkörpers der Gruppe von Heizkörpern zum Steuern eines Stellglieds, das dazu eingerichtet ist, die Heizleistung eines weiteren Heizkörpers der Gruppe von Heizkörpern zu steuern, herangezogen wird.

11. Softwareprogramm-Produkt umfassend Befehle, die bei der Ausführung des Programms durch ein System (300), eine Heizkörpervorrichtung (600), insbesondere gemäß einem der Ansprüche 7 bis 10, oder eine Regelvorrichtung (700), diese(s) veranlassen, ein Verfahren auszuführen umfassend den Schritt:
Ermitteln eines Steuerwerts für einen Heizkörper (301a, 301b) einer Mehrzahl an Heizkörpern (301a, 301b) zum Steuern einer Heizleistung des Heizkörpers (301a, 301b) in Abhängigkeit einer Raum-Soll-Temperatur (304a, 304b, 304c), einer für eine jeden Heizkörper (301a, 301b) der Mehrzahl an Heizkörpern (301a, 301b) erfassten Umgebungstemperatur und eines ermittelten Heizleistungsreferenzwerts von mindestens einem Heizkörpers (301a, 301b) der Mehrzahl an Heizkörpern (301a, 301b).

## Claims

1. Method for regulating a temperature in a room in which a plurality of heaters (301a, 301b) is arranged, wherein each of the heaters (301a, 301b) has an actuator (302a, 302b) for controlling a heating power of the respective heater (301a, 301b) of the plurality of heaters (301a, 301b) and a temperature sensor (303a, 303b) for determining a temperature in an environment of the respective heater (301a, 301b) of the plurality of heaters (301a, 301b), comprising the steps:
- specifying a room setpoint temperature (304a, 304b, 304c),
- detecting a respective temperature in the environment of each heater (301a, 301b) of the plurality of heaters (301a, 301b) by means of the temperature sensors (303a, 303b) as an ambient temperature of the respective heater (301a, 301b),
- determining a heating power reference value of at least one heater (301a, 301b) of the plurality of heaters (301a, 301b), and
- actuating the actuator (302a, 302b) of a heater (301a, 301b) of the plurality of heaters (301a, 301b) for controlling the heating power as a function of the specified room setpoint temperature (304a, 304b, 304c), the detected ambient temperatures of the plurality of heaters (301a, 301b) and the determined heating power reference value of the at least one heater (301a, 301b) of the plurality of heaters (301a, 301b).

2. Method according to claim 1, wherein
the step of actuating the actuator (302a, 302b) is carried out by means of a central unit for the actuators (302a, 302b) of a plurality of heaters (301a, 301b), in particular all heaters (301a, 301b), of the plurality of heaters (301a, 301b).

3. Method according to claim 1, wherein
the step of actuating the actuator (302a, 302b) is carried out by means of a plurality of decentralised units, in particular by means of in each case one decentralised unit, for the actuators (302a, 302b) of a plurality of heaters (301a, 301b), in particular all heaters (301a, 301b), of the plurality of heaters (301a, 301b).

4. Method according to one of claims 1 to 3, comprising the additional step of:
comparing the detected ambient temperatures of the plurality of heaters (301a, 301b) with one another, comprising the step of determining differences between the room setpoint temperature (304a, 304b, 304c) and the ambient temperatures of the plurality of heaters (301a, 301b), wherein
the comparison of the detected ambient temperatures of the plurality of heaters (301a, 301b) with one another is carried out by comparing the determined differences, and
the actuation of the actuator (302a, 302b) of a heater (301a, 301b) of the plurality of heaters (301a, 301b) for controlling the heating power is carried out as a function of the result of the comparison.

5. Method according to one of claims 1 to 4, comprising the additional step of:
determining a heater type of at least one heater (301a, 301b) of the plurality of heaters (301a, 301b), wherein
the actuation of the actuator (302a, 302b) of the one heater (301a, 301b) of the plurality of heaters (301a, 301b) is additionally carried out as a function of the heater type of the at least one heater (301a, 301b) of the plurality of heaters (301a, 301b).

6. Method according to one of claims 1 to 5, comprising one or more of the following additional steps of:
- determining an arrangement of at least one heater (301a, 301b) of the plurality of heaters (301a, 301b) in the room, wherein the actuation of the actuator (302a, 302b) of the one heater (301a, 301b) of the plurality of heaters (301a, 301b) is additionally carried out as a function of the arrangement in the room of the at least one heater (301a, 301b) of the plurality of heaters (301a, 301b);
- determining a volume flow through at least one heater (301a, 301b) of the plurality of heaters (301a, 301b), wherein the actuation of the actuator (302a, 302b) of the one heater (301a, 301b) of the plurality of heaters (301a, 301b) is additionally carried out as a function of the determined volume flow of the at least one heater (301a, 301b) of the plurality of heaters (301a, 301b);
- determining a temperature of a volume flow through at least one heater (301a, 301b) of the plurality of heaters (301a, 301b), wherein the actuation of the actuator (302a, 302b) of the one heater (301a, 301b) of the plurality of heaters (301a, 301b) is additionally carried out as a function of the determined temperature of the volume flow through the at least one heater (301a, 301b) of the plurality of heaters (301a, 301b);
- detecting a temperature change in the environment of at least one heater (301a, 301b) of the plurality of heaters (301a, 301b) by means of the temperature sensor (303a, 303b) of the at least one heater (301a, 301b) of the plurality of heaters (301a, 301b), wherein the actuation of the actuator (302a, 302b) of the one heater (301a, 301b) of the plurality of heaters (301a, 301b) is carried out as a function of the detected temperature change;
- detecting a change in an actuation of the actuator (302a, 302b) of at least one heater (301a, 301b) of the plurality of heaters (301a, 301b), wherein the actuation of the actuator (302a, 302b) of the one heater (301a, 301b) of the plurality of heaters (301a, 301b) is carried out as a function of the detected change in the actuation.

7. Heater apparatus (600) comprising:
an actuator (301) which is configured to control the heating power of a heater;
a temperature sensor (302) which is configured to detect a temperature in an environment of the heater;
a communication unit (606) which is configured to receive ambient temperature values of one or more further heaters;
a unit (304) for specifying a room setpoint temperature which is configured to specify a room setpoint temperature;
a control unit (305) which is configured to control the actuator (301) as a function of the specified room setpoint temperature, the detected temperature in the environment of the heater and the received ambient temperature values of the one or more further heaters and a determined heating power reference value of at least one of the one or more heaters.

8. Heater apparatus (600) according to claim 7, wherein
the control unit (305) is a decentralised control unit and/or is configured to control only the actuator (301) of the heater apparatus (600), in particular no actuator of a further heater apparatus.

9. Heater apparatus (600) according to either of claims 7 and 8, wherein
a signal strength of a signal from the one or more heaters at the communication unit (606) in each case exceeds a specified reference signal strength and/or a distance between the heater and the further heaters is in each case below a reference distance,
wherein the reference signal strength is specified as a function of the signal strengths of the signals of heaters of a group of heaters comprising the one or more heaters with the communication unit (606) as an evaluation point, and/or
the reference distance is specified as a function of distances between the heater and heaters of a group of heaters comprising the one or more heaters.

10. Heater apparatus (600) according to one of claims 7 to 9, wherein
the one or more heaters from a group of heaters in a room are selected such that the ambient temperature of each heater of the group of heaters is used for controlling an actuator which is configured to control the heating power of a further heater of the group of heaters.

11. Software program product comprising instructions which, when the program is executed by a system (300), a heater apparatus (600), in particular according to one of Claims 7 to 10, or a control apparatus (700), cause the latter to carry out a method comprising the step of:
determining a control value for a heater (301a, 301b) of a plurality of heaters (301a, 301b) for controlling a heating power of the heater (301a, 301b) as a function of a room setpoint temperature (304a, 304b, 304c), an ambient temperature detected for each heater (301a, 301b) of the plurality of heaters (301a, 301b) and a determined heating power reference value of at least one heater (301a, 301b) of the plurality of heaters (301a, 301b).

## Revendications

1. Procédé de régulation d'une température dans une pièce dans laquelle sont disposés une pluralité d'éléments de chauffage (301a, 301b), chacun d'éléments de chauffage (301a, 301b) présentant un organe de réglage (302a, 302b) pour commander une puissance de chauffage d'élément de chauffage respectif (301a, 301b) de la pluralité d'éléments de chauffage (301a, 301b) et un capteur de température (303a, 303b) pour déterminer une température dans un environnement d' élément de chauffage respectif (301a, 301b) de la pluralité d'éléments de chauffage (301a, 301b), comprenant les étapes suivantes :
- prédétermination d'une température de consigne de pièce (304a, 304b, 304c),
- détection d'une température respective dans l'environnement de chaque élément de chauffage (301a, 301b) de la pluralité d'éléments de chauffage (301a, 301b) au moyen des capteurs de température (303a, 303b) en tant que température ambiante d'éléments de chauffage respectif (301a, 301b),
- détermination d'une valeur de référence de puissance de chauffage d'au moins un élément de chauffage (301a, 301b) de la pluralité d'éléments de chauffage (301a, 301b), et
- commande de l'organe de réglage (302a, 302b) d'un élément de chauffage (301a, 301b) de la pluralité d'éléments de chauffage (301a, 301b) pour commander la puissance de chauffage en fonction de la température de consigne de pièce (304a, 304b, 304c) prédéterminée, des températures ambiantes détectées de la pluralité d'éléments de chauffage (301a, 301b) et de la valeur de référence de puissance de chauffage déterminée de l'au moins un élément de chauffage (301a, 301b) de la pluralité d'éléments de chauffage (301a, 301b).

2. Procédé selon la revendication 1, dans lequel
l'étape de commande de l'organe de réglage (302a, 302b) est réalisée au moyen d'une unité centrale pour les organes de réglage (302a, 302b) de plusieurs éléments de chauffage (301a, 301b), en particulier de tous les éléments de chauffage (301a, 301b), de la pluralité d'éléments de chauffage (301a, 301b).

3. Procédé selon la revendication 1, dans lequel
l'étape de commande de l'organe de réglage (302a, 302b) est réalisée au moyen de plusieurs unités décentralisées, en particulier au moyen de respectivement une unité décentralisée, pour les organes de réglage (302a, 302b) de plusieurs éléments de chauffage (301a, 301b), en particulier de tous les éléments de chauffage (301a, 301b), de la pluralité d'éléments de chauffage (301a, 301b).

4. Procédé selon l'une quelconque des revendications 1 à 3, comprenant l'étape supplémentaire :
comparaison des températures ambiantes détectées de la pluralité d'éléments de chauffage (301a, 301b) les unes avec les autres, comprenant l'étape de détermination de différences entre la température de consigne de pièce (304a, 304b, 304c) et les températures ambiantes de la pluralité d'éléments de chauffage (301a, 301b),
la comparaison des températures ambiantes détectées de la pluralité d'éléments de chauffage (301a, 301b) les unes avec les autres étant effectuée par comparaison des différences déterminées, et
la commande de l'organe de réglage (302a, 302b) d'un élément de chauffage (301a, 301b) de la pluralité d'éléments de chauffage (301a, 301b) pour commander la puissance de chauffage étant effectuée en fonction du résultat de la comparaison.

5. Procédé selon l'une quelconque des revendications 1 à 4, comprenant l'étape supplémentaire :
détermination d'un type d'éléments de chauffage d'au moins un élément de chauffage (301a, 301b) de la pluralité d'éléments de chauffage (301a, 301b),
la commande de l'organe de réglage (302a, 302b) de l'un élément de chauffage (301a, 301b) de la pluralité d'éléments de chauffage (301a, 301b) étant en outre effectuée en fonction du type d'éléments de chauffage de l'au moins un élément de chauffage (301a, 301b) de la pluralité d'éléments de chauffage (301a, 301b).

6. Procédé selon l'une quelconque des revendications 1 à 5, comprenant une ou plusieurs des étapes supplémentaires suivantes :
- détermination d'un agencement d'au moins un élément de chauffage (301a, 301b) de la pluralité d'éléments de chauffage (301a, 301b) dans la pièce, la commande de l'organe de réglage (302a, 302b) de l'un élément de chauffage (301a, 301b) de la pluralité d'éléments de chauffage (301a, 301b) étant en outre effectuée en fonction de l'agencement dans la pièce de l'au moins un élément de chauffage (301a, 301b) de la pluralité d'éléments de chauffage (301a, 301b) ;
- détermination d'un débit volumique à travers au moins élément de chauffage (301a, 301b) de la pluralité d'éléments de chauffage (301a, 301b), la commande de l'organe de réglage (302a, 302b) de l'un élément de chauffage (301a, 301b) de la pluralité d'éléments de chauffage (301a, 301b) étant en outre effectuée en fonction du débit volumique déterminé de l'au moins un élément de chauffage (301a, 301b) de la pluralité d'éléments de chauffage (301a, 301b) ;
- détermination d'une température d'un débit volumique à travers au moins un élément de chauffage (301a, 301b) de la pluralité d'éléments de chauffage (301a, 301b), la commande de l'organe de réglage (302a, 302b) de l'un élément de chauffage (301a, 301b) de la pluralité d'éléments de chauffage (301a, 301b) étant en outre effectuée en fonction de la température déterminée du débit volumique à travers l'au moins un élément de chauffage (301a, 301b) de la pluralité d'éléments de chauffage (301a, 301b) ;
- détection d'une variation de température dans l'environnement d'au moins un élément de chauffage (301a, 301b) de la pluralité d'éléments de chauffage (301a, 301b) au moyen du capteur de température (303a, 303b) de l'au moins un élément de chauffage (301a, 301b) de la pluralité d'éléments de chauffage (301a, 301b), la commande de l'organe de réglage (302a, 302b) de l'un élément de chauffage (301a, 301b) de la pluralité d'éléments de chauffage (301a, 301b) étant effectuée en fonction de la variation de température détectée ;
- détection d'une variation d'une commande de l'organe de réglage (302a, 302b) d'au moins élément de chauffage (301a, 301b) de la pluralité d'éléments de chauffage (301a, 301b), la commande de l'organe de réglage (302a, 302b) de l'un élément de chauffage (301a, 301b) de la pluralité d'éléments de chauffage (301a, 301b) étant effectuée en fonction de la variation détectée de la commande.

7. Dispositif d'éléments de chauffage (600) comprenant :
un organe de réglage (301) qui est conçu pour commander la puissance de chauffage d'un élément de chauffage;
un capteur de température (302) qui est conçu pour détecter une température dans un environnement d'élément de chauffage;
une unité de communication (606) qui est conçue pour recevoir des valeurs de température ambiante d'un ou de plusieurs autres éléments de chauffage;
une unité de prédétermination de température de consigne de pièce (304) qui est conçue pour prédéterminer une température de consigne de pièce ;
une unité de commande (305) qui est conçue pour commander l'organe de réglage (301) en fonction de la température de consigne de pièce prédéterminée, de la température détectée dans l'environnement d'élément de chauffage et des valeurs de température ambiante reçues des un ou plusieurs autres éléments de chauffage et d'une valeur de référence de puissance de chauffage déterminée d'au moins l'un des un ou plusieurs éléments de chauffage.

8. Dispositif d'éléments de chauffage (600) selon la revendication 7, dans lequel
l'unité de commande (305) est une unité de commande décentralisée et/ou est conçue pour commander uniquement l'organe de réglage (301) du dispositif d'éléments de chauffage (600), en particulier aucun organe de réglage d'un autre dispositif d'éléments de chauffage.

9. Dispositif d'éléments de chauffage (600) selon l'une quelconque des revendications 7 ou 8, dans lequel
une intensité de signal d'un signal des un ou plusieurs éléments de chauffage au niveau de l'unité de communication (606) dépasse respectivement une intensité de signal de référence prédéterminée et/ou une distance entre l'élément de chauffage et les autres éléments de chauffage se situe respectivement en dessous d'une distance de référence,
l'intensité de signal de référence étant prédéterminée en fonction des intensités de signal des signaux d'éléments de chauffage d'un groupe d'éléments de chauffage comprenant les un ou plusieurs éléments de chauffage avec l'unité de communication (606) en tant que point d'évaluation et/ou
la distance de référence étant prédéterminée en fonction de distances entre l' élément de chauffage et d'éléments de chauffage d'un groupe d'éléments de chauffage comprenant les un ou plusieurs éléments de chauffage.

10. Dispositif d'éléments de chauffage (600) selon l'une quelconque des revendications 7 à 9, dans lequel
les un ou plusieurs éléments de chauffage d'un groupe d'éléments de chauffage dans une pièce sont choisis de telle sorte que la température ambiante de chaque élément de chauffage du groupe d'éléments de chauffage soit utilisée pour commander un organe de réglage qui est conçu pour commander la puissance de chauffage d'un autre élément de chauffage du groupe d'éléments de chauffage.

11. Produit de programme logiciel comprenant des instructions qui, lors de l'exécution du programme par un système (300), un dispositif d'éléments de chauffage (600), en particulier selon l'une quelconque des revendications 7 à 10, ou un dispositif de régulation (700), amènent ceux-ci à exécuter un procédé comprenant l'étape :
détermination d'une valeur de commande pour un élément de chauffage (301a, 301b) d'une pluralité d'éléments de chauffage (301a, 301b) pour commander une puissance de chauffage d'élément de chauffage (301a, 301b) en fonction d'une température de consigne de pièce (304a, 304b, 304c), d'une température ambiante détectée pour chaque élément de chauffage (301a, 301b) de la pluralité d'éléments de chauffage (301a, 301b) et d'une valeur de référence de puissance de chauffage déterminée d'au moins un élément de chauffage (301a, 301b) de la pluralité d'éléments de chauffage (301a, 301b).
